# EUROPEAN PATENT SPECIFICATION

(11) **EP 3 139 083 B1**
(45) Date of publication and mention of the grant of the patent: **22.04.2020**
(21) Application number: 16186444.2
(22) Date of filing: 30.08.2016
(51) Int. Cl.: F21V 7/06, F21Y 115/30, F21S 41/14, F21S 41/16, F21V 9/30, G02B 27/28, G02B 19/00, F21S 43/13, F21S 43/31, F21S 41/32

(54) **LIGHT EMITTING APPARATUS AND ILLUMINATION APPARATUS INCLUDING THE SAME**
LICHT EMITTIERENDES SYSTEM UND BELEUCHTUNGSVORRICHTUNG DIE DIESES ENTHÄLT
EMETTEUR DE LUMIERE ET APPAREIL D'ECLAIRAGE LE CONTENANT

(30) Priority: 04.09.2015 KR 20150125321
(43) Date of publication of application: 08.03.2017
(73) Proprietor: LG Innotek Co., Ltd., Seoul, 04637 (KR)
(72) Inventor: SON, Chang Gyun, 04637 Seoul (KR); KIM, Ki Cheol, 04637 Seoul (KR); KIM, Sung Phil, 04637 Seoul (KR); PARK, Kang Yeol, 04637 Seoul (KR)
(74) Representative: Novagraaf Technologies

(56) References cited:
- DE-A1-102013 226 639
- JP-A- 2014 026 195
- JP-B2- 3 648 368
- US-A1- 2005 024 479
- US-A1- 2014 063 779

## Description

### TECHNICAL FIELD

Embodiments relate to a light emitting apparatus and an illumination apparatus including the same.

### BACKGROUND

A light emitting apparatus is widely used for homes, in industry, and in vehicles. For example, a halogen lamp, a high-intensity discharge (HID) lamp, a xenon lamp, and a light emitting diode are used as a light source of a light emitting apparatus that is mounted in a head lamp for vehicles. In addition, increasing attention is being paid to a laser diode (LD) as a next-generation light source of the light emitting apparatus.

For example, the patent reference US 2014/063779 discloses a lighting device that includes one or more lumiphoric materials spatially segregated from one or more electrically activated emitters and arranged to emit light toward a reflector for reflection of lumiphor-converted light emissions toward a light transmissive end of the lighting device. Another example, the patent reference JP 2014/026195, discloses a light source device capable of synthesizing light from light sources having polarization dependence, and further discloses a projector that can form image light having high luminance by using the light source device while suppressing increases in sizes of the light sources. The patent reference JP3648368, for his part, discloses a light source device capable of making the deformation of a base small by suppressing effects of a thermal deformation force to be generated in the base by making the thermal deformation force have directivity due to a modification of the temperature.

In the case in which the LD is used for vehicles, it is possible to satisfy functional requirements, such as long-distance irradiation and searchlight function, design, and efficiency. The reason for this is that the LD exhibits higher luminance than conventional light sources while having a smaller area than the conventional light sources and that the LD exhibits its unique characteristics, such as straightness and polarization. Consequently, it is expected that the LD will attract much more attention than conventional light sources from now on.

Meanwhile, the light emitting apparatus may include a plurality of light sources. In this case, it is difficult to focus a plurality of beams emitted by the light sources on a single point, with the result that the efficiency of the light emitting apparatus is reduced, and the size of the beams is increased, whereby the function of the light emitting apparatus is deteriorated. Furthermore, if the beams deviate from the focal point even a little, the beams may be emitted from a plurality of spots. Since tolerance for the focal position is not given when manufacturing a conventional light emitting apparatus, as described above, it is difficult to align a plurality of light sources, and the tolerance is critical.

### SUMMARY

Embodiments provide a light emitting apparatus exhibiting excellent performance and an illumination apparatus including the same.

The invention is defined in the independent claim. Further advantageous embodiments are defined in the dependent claims. In one embodiment, a light emitting apparatus includes a light source unit for emitting a plurality of laser beams in the parallel state, a light transmission unit for gathering the laser beams emitted from the light source unit in the parallel state into a single beam and outputting the single beam to a single focus, a wavelength conversion unit for converting the wavelength of the single beam on the focus, and a housing for receiving the light source unit, the light transmission unit, and the wavelength conversion unit, wherein the light source unit comprises: a first laser light source emitting a first beam, which is one of the laser beams; a second laser light source emitting a second beam, which is another of the laser beams and proceeds parallel to the first beam; a light source base fixing the first and second laser light sources and having recesses; a first lens holder, the first laser light source being disposed between the light source base and the first lens holder, and a second lens holder, the second laser light source being disposed between the light source base and the second lens holder, wherein the first lens holder tightly pushes the first laser light source against the light source base, wherein the second lens holder tightly pushes the second laser light source against the light source base (230), and wherein the first and second lens holders are fitted into the recesses so as to be fixed in the recesses.

The first and second lens holders tightly pushing the first and second laser light sources against the light source base stick the first and second laser light sources to the light source base.

For example, the light source unit may further include a first collimation lens for collimating the first beam emitted from the first laser light source, and a second collimation lens for collimating the second beam emitted from the second laser light source.

For example, the first and second laser light sources may be arranged vertically, may be arranged horizontally, or may intersect each other.

For example, the light source unit may further include a first barrel, to which the first collimation lens is fastened, and a second barrel, to which the second collimation lens is fastened, and wherein the first and second lens holders for align the first and second barrels with the first and second laser light sources, respectively.

For example, the light source unit may further include a first retainer for fixing the first collimation lens fastened to the first barrel and a second retainer for fixing the second collimation lens fastened to the second barrel.

For example, the light source base may include a fastening part fastened to the housing. The fastening part of the light source base may include a thermal pad or a thermal compound. The fastening part of the light source base may include a heat dissipation material.

For example, the first retainer may be disposed between the first collimation lens and an inner surface of the first barrel.

For example, the second retainer may be disposed between the second collimation lens and an inner surface of the second barrel .

For example, the housing may include a main base for supporting the light source unit, the light transmission unit, and the wavelength conversion unit, the main base corresponding to the bottom of the light emitting apparatus, a main cover fastened to the main base for defining a space for receiving the light source unit and at least a portion of the light transmission unit, and a wavelength base fastened to the main base for defining a space for receiving a remaining portion of the light transmission unit and for defining a space for receiving the wavelength conversion unit.

For example, connections of each of the light source unit, the light transmission unit, and the wavelength conversion unit to the housing may be sealed.

For example, each of the light source unit, the light transmission unit, and the wavelength conversion unit may be coupled to the main base by screw engagement or by bonding.

In another embodiment, an illumination apparatus includes the light emitting apparatus with the above-stated construction and an illumination reflector for reflecting wavelength-converted light output from the focus of the light emitting apparatus such that the wavelength-converted light is output.

### BRIEF DESCRIPTION OF THE DRAWINGS

Arrangements and embodiments may be described in detail with reference to the following drawings in which like reference numerals refer to like elements and wherein: (Constructional details on the light transmission unit including light path conversion unit (Fig.2A-2C, 13A/B, 14A/B, 15A/B), path holder (Fig.16A-F), reflection unit (Fig.17A-D) and reflection holder (Fig.18A-E) and the wavelength conversion unit including top holder (Fig.19A-G) and bottom holder (Fig.20A-E) are not covered by the present invention.)

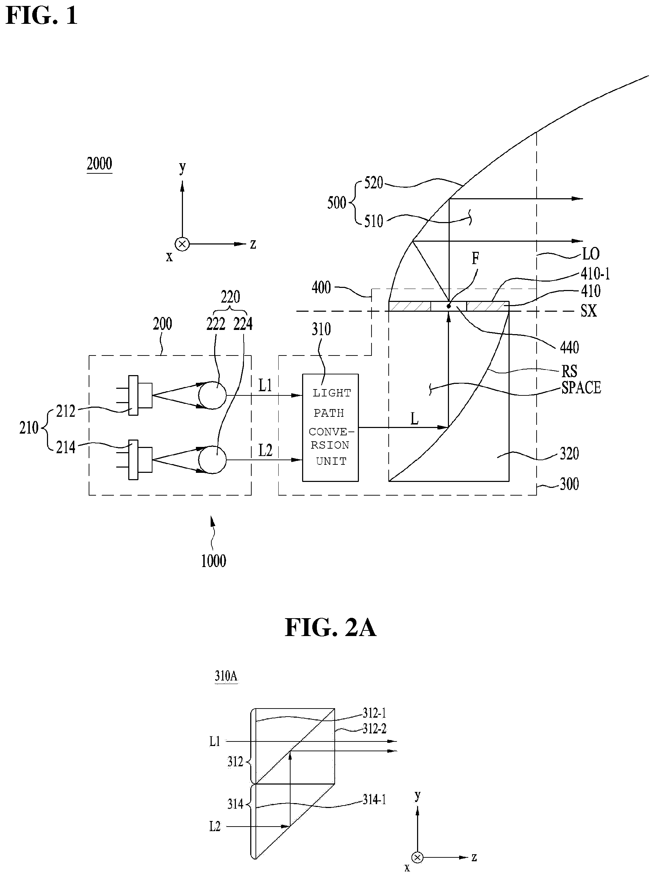

FIG. 1 is a view schematically showing an illumination apparatus including a light emitting apparatus according to an embodiment;
FIGs. 2A to 2C are sectional views showing various exemplary embodiments of a light path conversion unit shown in FIG. 1;

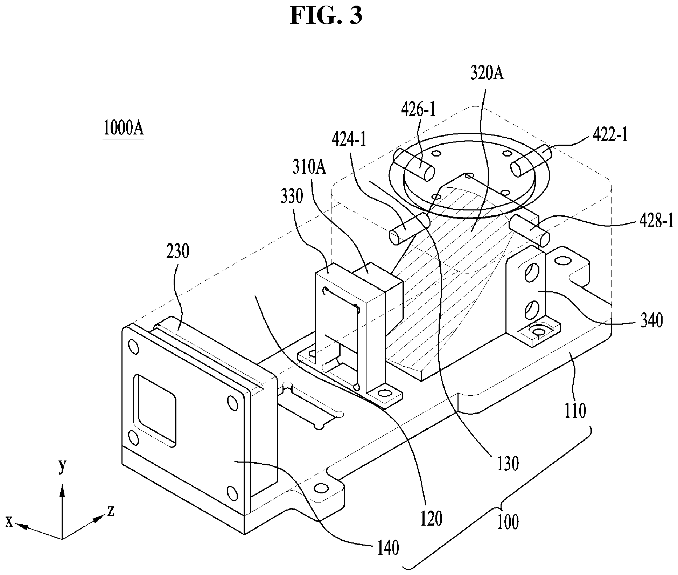

FIG. 3 is an upper assembled perspective view of an embodiment of the light emitting apparatus shown in FIG. 1;

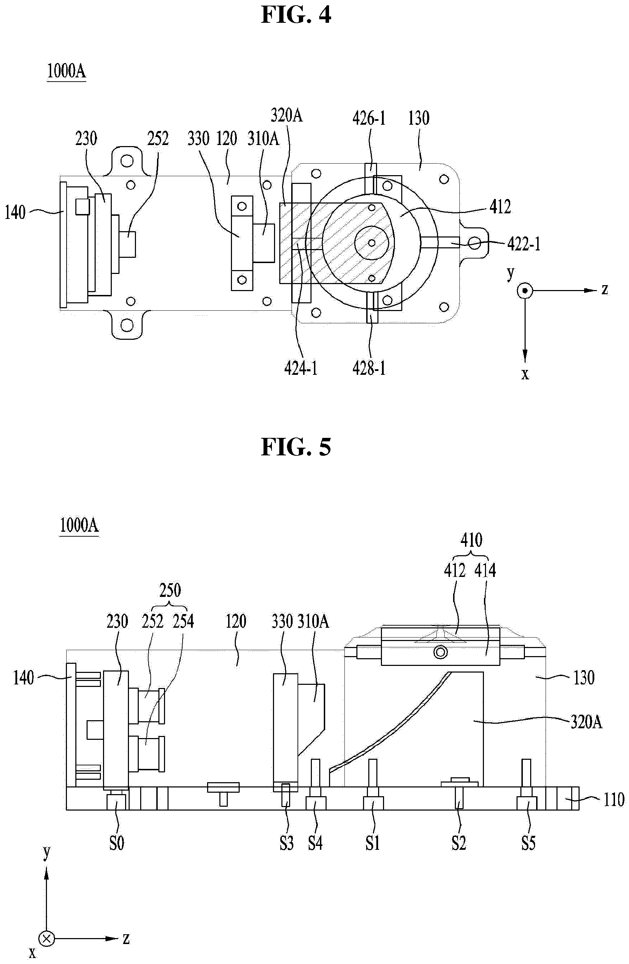

FIG. 4 is a plan view of the light emitting apparatus shown in FIG. 3;
FIG. 5 is an assembled front view of the light emitting apparatus shown in FIG. 3;

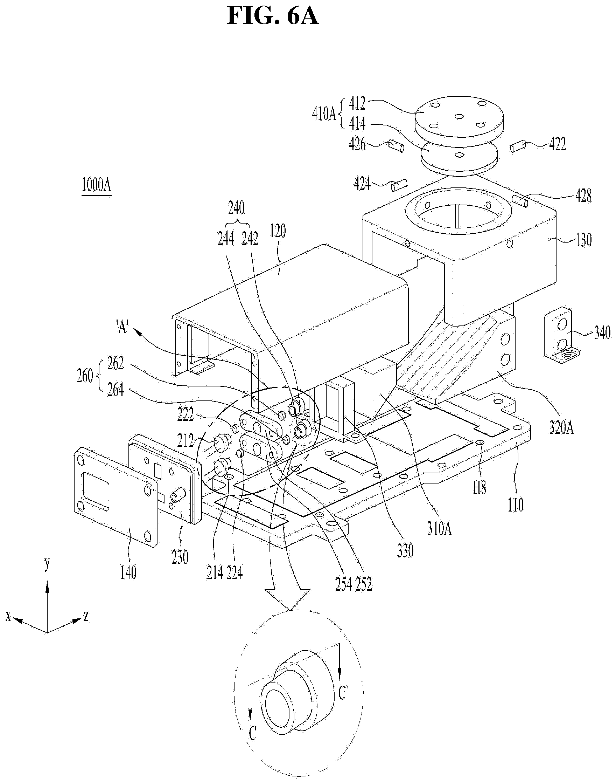

FIG. 6A is an upper exploded perspective view of the light emitting apparatus shown in FIG. 3;

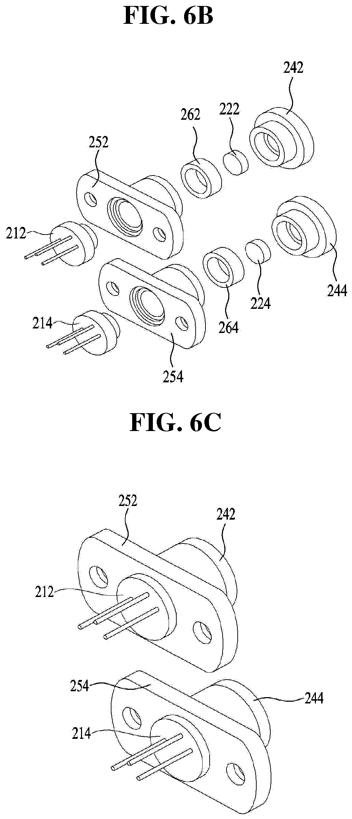

FIGs. 6B and 6C are respectively an exploded perspective view and an assembled perspective view showing part 'A' in FIG. 6A;

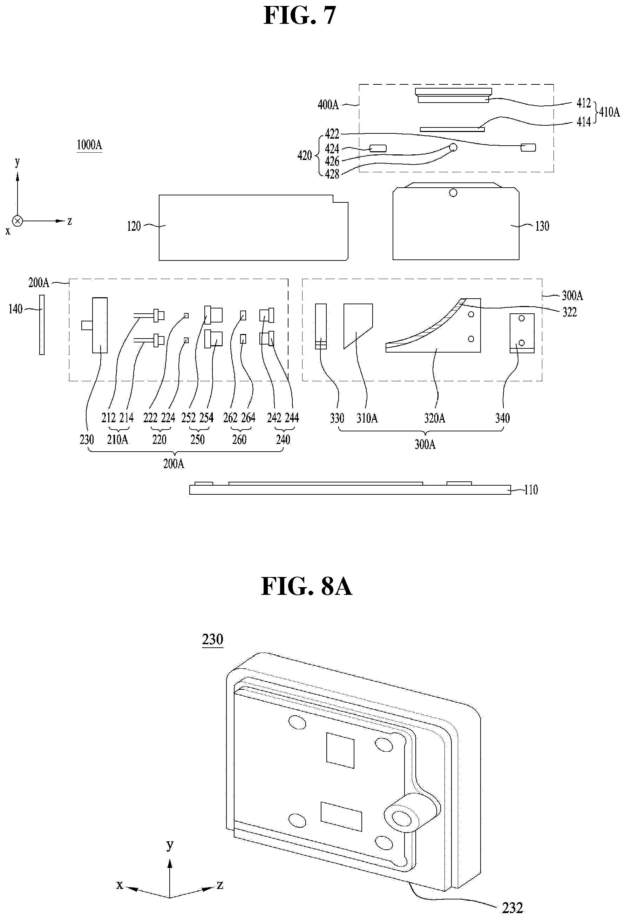

FIG. 7 is an exploded front view of the light emitting apparatus shown in FIG. 3;
FIGs. 8A to 8I are views showing various shapes of a light source base;

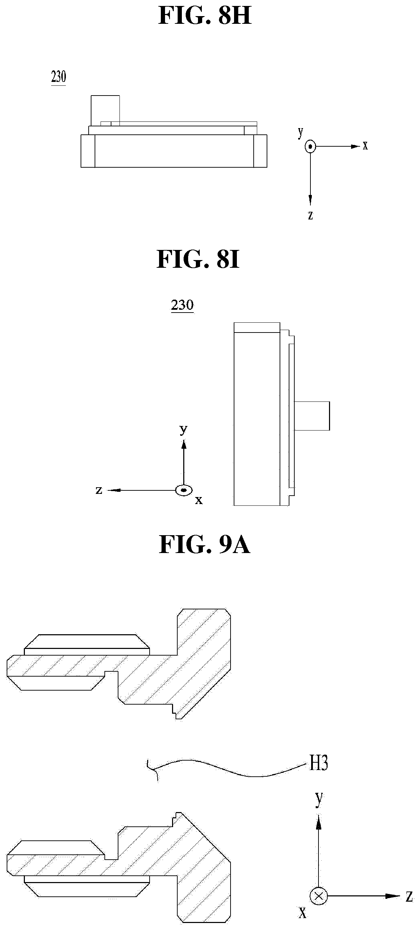

FIGs. 9A to 9C are views showing various shapes of first and second barrels;

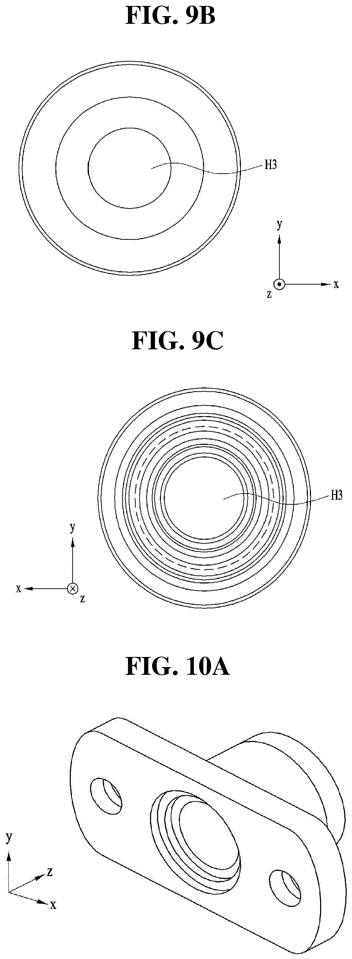

FIGs. 10A to 10F are views showing various shapes of first and second lens holders;

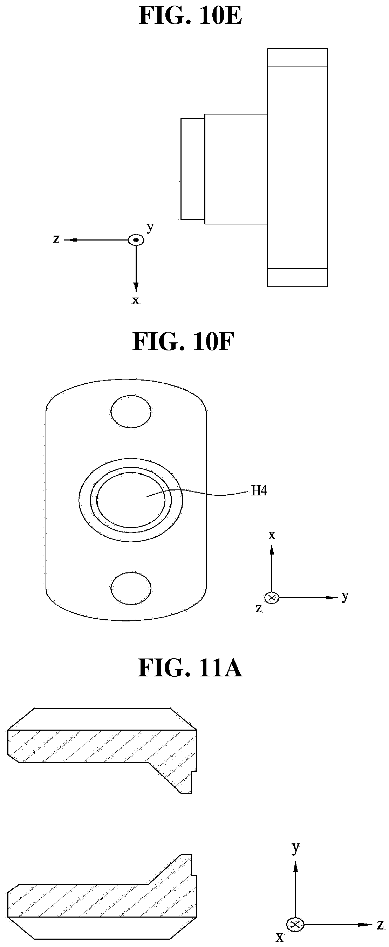

FIGs. 11A to 11C are views showing various shapes of first and second retainers;

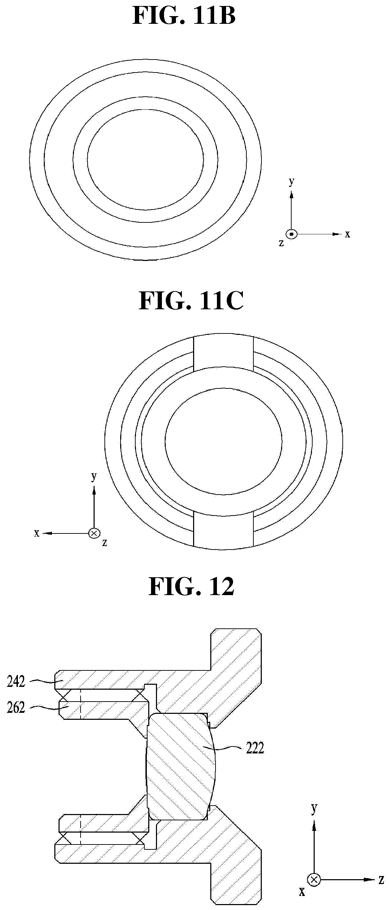

FIG. 12 is a cutaway sectional view showing the state in which the first retainer, the first barrel, and a first collimation lens are coupled to each other;

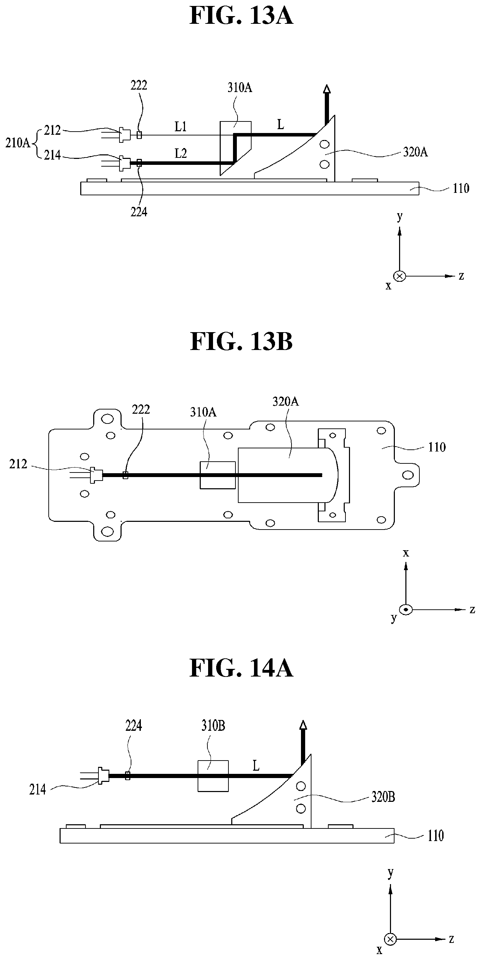

FIGs. 13A and 13B are respectively a sectional view and a plan view showing an exemplary embodiment of the light path conversion unit;

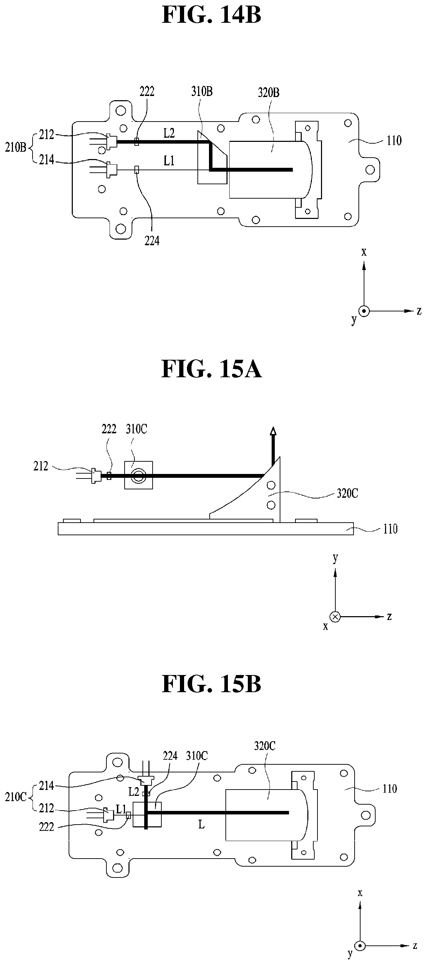

FIGs. 14A and 14B are respectively a sectional view and a plan view showing another exemplary embodiment of the light path conversion unit;
FIGs. 15A and 15B are respectively a sectional view and a plan view showing a further exemplary embodiment of the light path conversion unit;

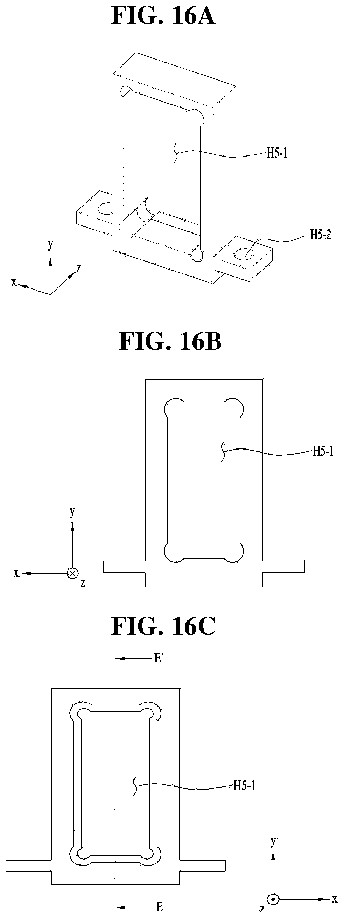

FIGs. 16A to 16F are views showing various shapes of a path holder;

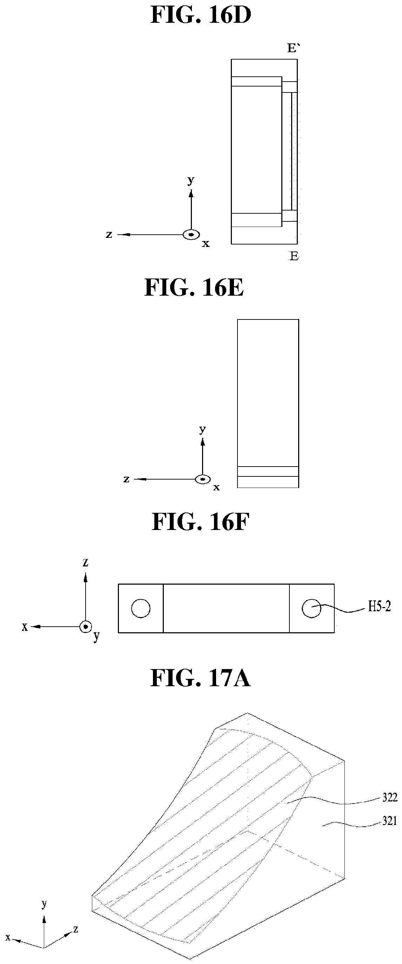

FIGs. 17A to 17D are views showing various shapes of a reflection unit;

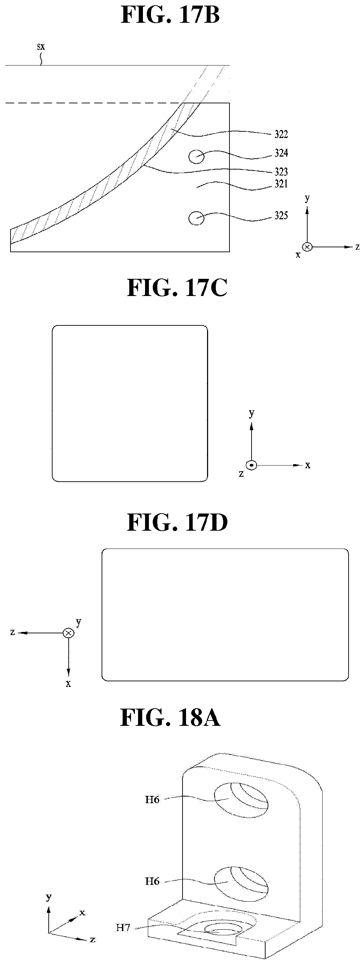

FIGs. 18A to 18E are views showing various shapes of a reflection holder;

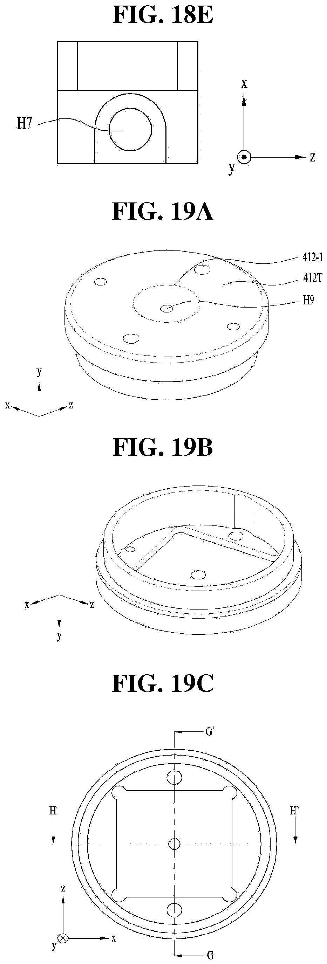

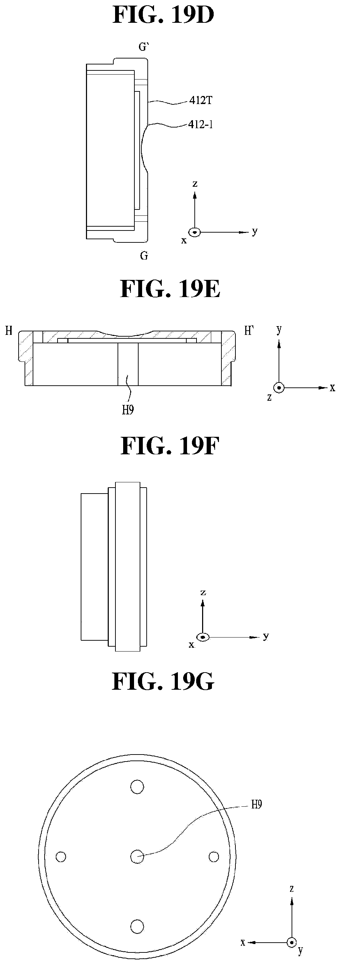

FIGs. 19A to 19G are views showing various shapes of a top holder;

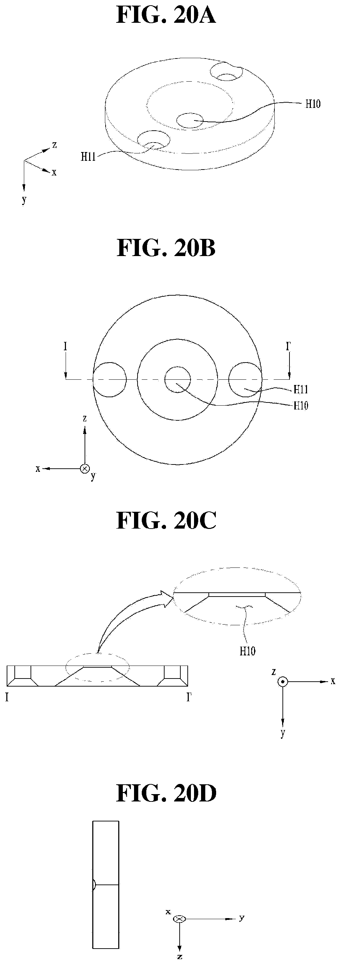

FIGs. 20A to 20E are views showing various shapes of a bottom holder;

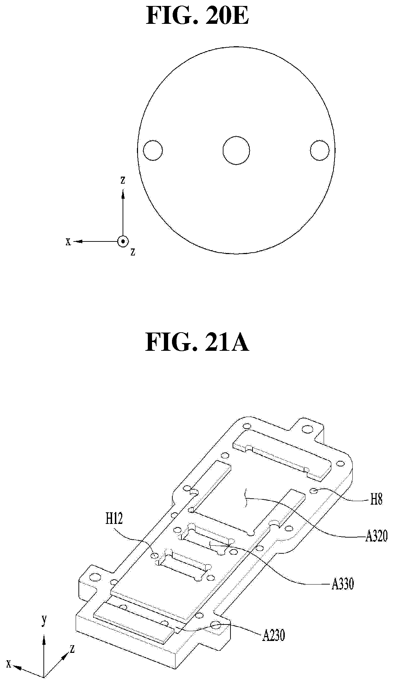

FIGs. 21A to 21H are views showing various shapes of a main base;

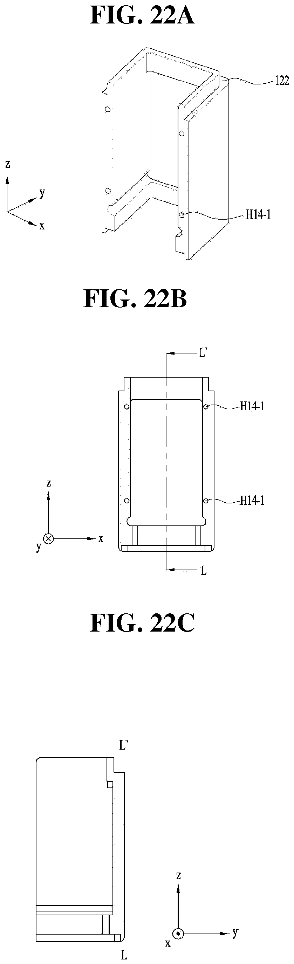

FIGs. 22A to 22G are views showing various shapes of a main cover;

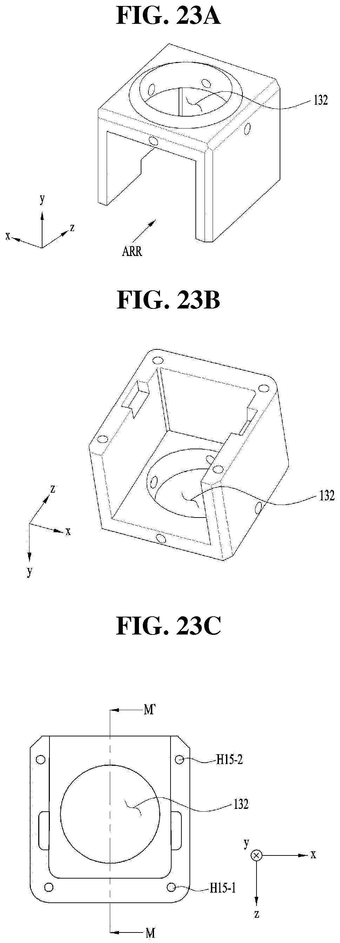

FIGs. 23A to 23I are views showing various shapes of a wavelength base;

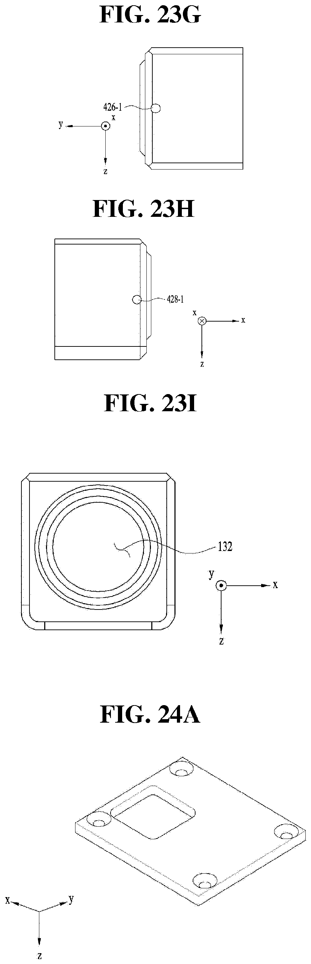

FIGs. 24A to 24F are views showing various shapes of a circuit cover; and

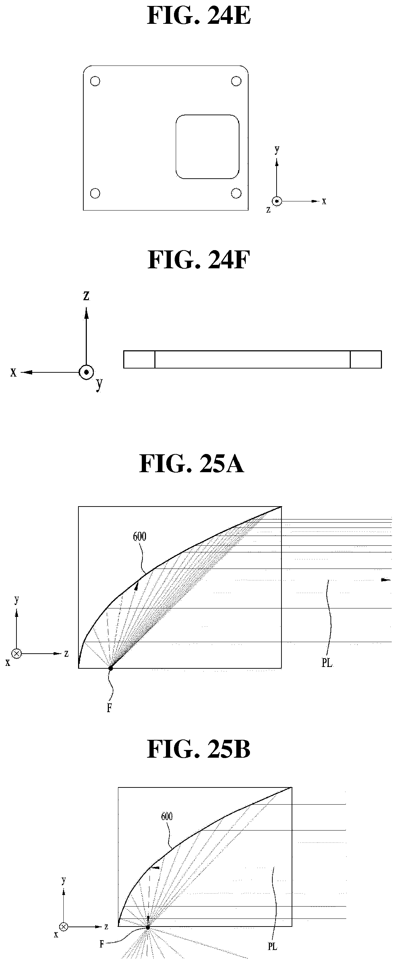

FIGs. 25A and 25B are views illustrating features in which a plurality of beams is reflected by a parabolic reflective surface.

### DESCRIPTION OF SPECIFIC EMBODIMENTS

Reference will now be made in detail to the preferred embodiments, examples of which are illustrated in the accompanying drawings. However, embodiments may be modified into various other forms. Embodiments are not restrictive but are illustrative. Embodiments are provided to more completely explain the disclosure to a person having ordinary skill in the art.

It will be understood that when an element is referred to as being "on" or "under" another element, it can be directly on/under the element, and one or more intervening elements may also be present.

When an element is referred to as being "on" or "under," "under the element" as well as "on the element" can be included based on the element.

In addition, relational terms, such as "first," "second," "on/upper part/above" and "under/lower part/below," are used only to distinguish between one subject or element and another subject and element without necessarily requiring or involving any physical or logical relationship or sequence between such subjects or elements.

Hereinafter, light emitting apparatuses 1000 and 1000A and an illumination apparatus 2000 according to embodiments will be described using a Cartesian coordinate system (x, y, z). However, the disclosure is not limited thereto. That is, other different coordinate systems may be used. In the drawings, an x-axis, a y-axis, and a z-axis of the Cartesian coordinate system are perpendicular to each other. However, the disclosure is not limited thereto. That is, the x-axis, the y-axis, and the z-axis may intersect each other.

FIG. 1 is a view schematically showing an illumination apparatus 2000 including a light emitting apparatus 1000 according to an embodiment.

The illumination apparatus 2000 according to an embodiment shown in FIG. 1 may include a light emitting apparatus 1000 and an illumination optical system 500. The illumination optical system 500 is merely an example for easy understanding of the light emitting apparatus 1000, and the light emitting apparatus 1000 according to an embodiment is not limited by the specific construction of the illumination optical system 500. Consequently, the light emitting apparatus 1000 according to an embodiment may be used together with another illumination optical system having a construction different from that of the illumination optical system 500 shown in FIG. 1. Alternatively, the light emitting apparatus 1000 may be used without the illumination optical system 500.

The light emitting apparatus 1000 includes a light source unit 200, a light transmission unit 300, and a wavelength conversion unit 400.

The light source unit 200 collimates a plurality of laser beams and outputs the collimated beams to the light transmission unit 300. To this end, the light source unit 200 includes a plurality of light sources 210 and a plurality of collimation lenses 220. Hereinafter, the light source unit 200 will be described as including two light sources for the convenience of description. However, the disclosure is not limited thereto.

The plurality of light sources 210 of the light source unit 200 includes first and second laser light sources 212 and 214. The first and second laser light sources 212 and 214 respectively emit first and second laser beams as the plurality of laser beams. That is, the first laser light source 212 emits the first laser beam, and the second laser light source 214 emits the second laser beam.

For example, the laser beam emitted by each of the first and second laser light sources 212 and 214 may have a wavelength of 420 nm to 480 nm, which is a blue wavelength. However, the disclosure is not limited thereto.

In addition, the more power that is output from each of the first and second laser light sources 212 and 214, the better. The power output from each of the first and second laser light sources 212 and 214 may be changed depending on the performance of the used wavelength conversion unit 400 and the purpose of use of the light emitting apparatus 1000.

In addition, the light source unit 200 may include collimation lenses in a number equivalent to the number of light sources 212 and 214. In FIG. 1, the number of light sources 212 and 214 is two, and therefore the number of collimation lenses is two.

A first collimation lens 222 may collimate the first laser beam emitted from the first laser light source 212 and may output the collimated laser beam as a first collimated beam L1, and a second collimation lens 224 may collimate the second laser beam emitted from the second laser light source 214 and may output the collimated laser beam as a second collimated beam L2.

The first and second collimation lenses 222 and 224 may have various shapes depending on the emission characteristics of the first and second laser light sources 212 and 214. In addition, the first and second collimation lenses 222 and 224 may have different efficiencies depending on at least one selected from among the size, material, surface conditions, surface coating or lack thereof, and shape thereof.

For example, the ratio, that is efficiency, of output to input of each of the first and second collimation lenses 222 and 224 may be 80% or higher. However, the disclosure is not limited thereto. In addition, the divergence angle of the beam transmitted through each of the first and second collimation lenses 222 and 224 may be ±1 degree or less. However, the disclosure is not limited thereto.

The light transmission unit 300 gathers the first and second collimated beams L1 and L2 emitted from the light source unit 200 into a single beam and outputs the single beam to a single focus on the wavelength conversion unit 400. To this end, the light transmission unit 300 may include a light path conversion unit 310 and a reflection unit 320.

The light path conversion unit 310 converts the paths of the first and second collimated beams L1 and L2 emitted from the light source unit 200 so as to gather the first and second collimated beams L1 and L2 into a single beam L. The light path conversion unit 310 may have various constructions depending on whether the first and second laser light sources 212 and 214 are arranged vertically, are arranged horizontally, or intersect each other. In addition, the overall size of the light emitting apparatus 1000 may be changed depending on whether the first and second laser light sources 212 and 214 are arranged vertically, are arranged horizontally, or intersect each other.

FIGs. 2A to 2C are sectional views respectively showing various exemplary embodiments 310A to 310C of the light path conversion unit 310 shown in FIG. 1. (Constructional details on the light path conversion unit, including light transmission unit, reflection unit and prism, are not covered by the present invention.)

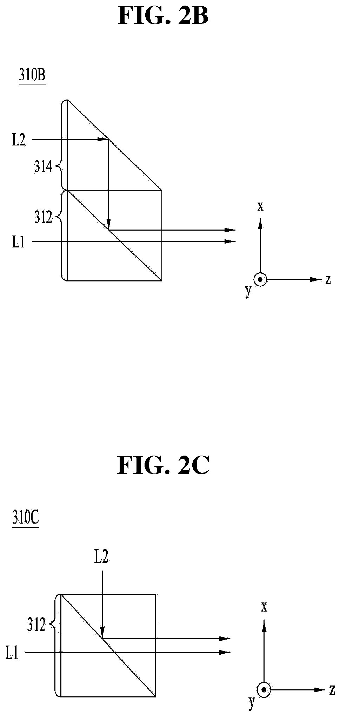

In the case in which the first and second laser light sources 212 and 214 are arranged vertically or horizontally, the light path conversion units 310A and 310B respectively shown in FIGs. 2A and 2B may each include a light transmission and reflection unit 312 and a prism 314.

In the case in which the first and second laser light sources 212 and 214 are arranged vertically, as shown in FIG. 2A, the first collimated beam L1 output from the first collimation lens 222 is incident on the light path conversion unit 310A in a first direction (for example, in the z-axis direction), and the second collimated beam L2 output from the second collimation lens 224 is incident on the light path conversion unit 310A in a direction parallel to the first direction. At this time, the prism 314 reflects the second beam L2 in a second direction (for example, in the y-axis direction), which is perpendicular to the first direction. The light transmission and reflection unit 312 transmits the first beam L1 in the first direction and reflects the second beam L2, which has been reflected by the prism 314, in the first direction. As a result, a single beam may be output from the light path conversion unit 310A in the first direction. The first beam L1 may advance in a TM mode, and the second beam L2 may advance in a TE mode. In addition, the transmittance of the first beam L1 may be 95% or more, and the reflectance of the second beam L2 may be 95% or more.

In the case in which the first and second laser light sources 212 and 214 are arranged horizontally, as shown in FIG. 2B, the prism 314 reflects the second beam L2, incident thereon in the direction parallel to the first direction in which the first beam L1 is incident thereon, in a direction perpendicular to the first and second directions (for example, in the x-axis direction; hereinafter, referred to as a 'third direction'). At this time, the light transmission and reflection unit 312 transmits the first beam L1 in the first direction and reflects the second beam L2, which has been reflected in the third direction by the prism 314, in the first direction. As a result, a single beam L is output.

In the case in which the first and second laser light sources 212 and 214 intersect each other instead of being arranged vertically or horizontally, as shown in FIG. 2C, the light path conversion unit 310C may include only a light transmission and reflection unit 312. Referring to FIG. 2C, the light transmission and reflection unit 312 transmits the first beam L1 in the first direction and reflects the second beam L2, which id incident thereon in the third direction, in the first direction. As a result, a single beam L is output.

In order to perform the above operation, the light transmission and reflection unit 312 shown in each of FIGs. 2A to 2C may include a polarization beam splitter (PBS) or a double refraction material such as calcite. The light transmission and reflection unit 312 gathers the plurality of beams into a single beam.

In the case in which the light transmission and reflection unit 312 shown in each of FIGs. 2A to 2C is implemented by a PBS, each of an incidence surface 312-1 and an exit surface 312-2 of the PBS and an incidence surface 314-1 of the prism 314 may be coated with an anti reflector (AR). For example, the anti reflector may have a reflectance of 0.5 % or less.

In addition, the y-axis length of the incidence surface 312-1 of the PBS 312 and the y-axis length of the incidence surface 314-1 of the prism 314 shown in each of FIGs. 2A to 2C may be equal. Furthermore, the y-axis length and the z-axis length of the PBS 312 may be equal.

Meanwhile, the reflection unit 320 may reflect the single beam L output from the light path conversion unit 310 to a focal point F. To this end, the reflection unit 320 may have a parabolic sectional shape. However, the disclosure is not limited thereto.

In addition, a reflective surface RS of the reflection unit 320, by which light is reflected, may be mirror-coated. Alternatively, a mirror-coated transparent material may fill the space adjacent to the reflective surface RS of the reflection unit 320. At this time, the surface on which the single beam is incident, must be perpendicular to a symmetric axis SX of the reflection unit 320 shown in FIG. 1. In the case in which the space is filled with the transparent material, the difference in index of refraction between the wavelength conversion unit 400 and the material filling the space may be within a predetermined range. In the case in which the space is filled with the transparent material, the reflective surface RS may need not mirror-coated as long as total reflection is achieved.

In addition, at least one selected from among the focal distance, the offset distance, and the radius of curvature R of the parabolic reflecting mirror type reflection unit 320 may be set based on the angle at which the beam having passed through the light path conversion unit 310 is reflected by the reflection unit 320. That is, the angle at which the beam is reflected by the reflection unit 320 may be changed for example into 0 degree of a vertical direction or other degree, depending on at least one selected from among the field to which the light emitting apparatus 1000 is applied, the arrangement of the first and second laser light sources 212 and 214, and the external dimensions of the light emitting apparatus 1000.

Meanwhile, the wavelength conversion unit 400 may convert the wavelength of the single beam L focused on the focal point F and may output light having the converted wavelength to the illumination optical system 500. To this end, the wavelength conversion unit 400 may include a material receiving part 410 and a wavelength conversion material 440. (Details on the wavelength conversion unit, including wavelength conversion material and material receiving part, are not covered by the present invention.)

The material receiving part 410 includes a space for receiving the wavelength conversion material 440, and has an exit through which light, the wavelength of which has been converted by the wavelength conversion material 440, is output.

The wavelength conversion material 440 may be received in the material receiving part 410 such that the focus F is located on the center thereof. The wavelength conversion material 440 converts the wavelength of the single beam L that has reached the focus F. The wavelength of the light reflected by the reflection unit 320 may be changed while passing through the wavelength conversion material 440. However, not all beams that have been transmitted through the wavelength conversion material 440 may be beams having converted wavelengths.

The wavelength of the light reflected by the reflection unit 320 is changed by the wavelength conversion material 440, with the result that white light or light having a desired color temperature may be output through a light exit surface L0 of the illumination apparatus 2000. To this end, the wavelength conversion material 440 may include at least one selected from a phosphor, such as a ceramic phosphor, a lumiphore, and a YAG single-crystal. The lumiphore may be a luminescent material or a structure including a luminescent material.

In addition, light having a desired color temperature may be output from the illumination apparatus 2000 by adjusting at least one selected from among the concentration, the particle size, and the particle size distribution of various ingredients included in the wavelength conversion material 440, the thickness of the wavelength conversion material 440, and the surface roughness of, or presence of air bubbles in, the wavelength conversion material 440. For example, the wavelength conversion material 440 may convert the wavelength band of light to fall within the range from 3000K to 9000K. That is, light having a wavelength converted by the wavelength conversion material 440 may have a color temperature range of 3000K to 9000K based on the color temperature. However, the disclosure is not limited thereto.

The wavelength conversion material 440 may be of various types. For example, the wavelength conversion material 440 may be of a phosphor in glass (PIG) type, a poly crystalline type (or a ceramic type), or a single crystalline type.

The more the difference in index of refraction between the wavelength conversion material 440 and air in a space 510 defined in the illumination optical system 500 is small, the more improved the light extraction efficiency of the illumination apparatus 2000 may be. To this end, the space 510 may be filled with a material having a small difference in index of refraction from the wavelength conversion material 440, rather than air.

The wavelength conversion unit 400 may support an illumination reflector 520 of the illumination optical system 500. However, the disclosure is not limited thereto. The illumination reflector 520 may be disposed so as to be spaced apart from the wavelength conversion unit 400, and may reflect light output from the wavelength conversion unit 400. The illumination reflector 520 may reflect light having a wavelength that is not converted by the wavelength conversion unit 400 as well as light having a wavelength that is converted by the wavelength conversion unit 400. To this end, the illumination reflector 520 may have a cross-sectional round (or parabolic) shape. However, the disclosure is not limited thereto.

In the case in which the illumination reflector 520 has a round (or parabolic) shape, it is possible to advantageously collimate light output from an imaginary light exit surface L0. The illumination reflector 520 may include at least one selected from among an aspheric surface, a freeform curve surface, a Fresnel lens, and a holography optical element (HOE) according to the desired illuminance distribution. The freeform curve surface may be a shape having variously curved surfaces.

In the case in which the Fresnel lens is used as the illumination reflector 520, the Fresnel lens may reflect light having a wavelength that is not converted by the wavelength conversion unit 400 as well as light having a wavelength that is converted by the wavelength conversion unit 400.

In addition, a surface 410-1 of the material receiving part 410 that faces the illumination reflector 520 may be further provided with a reflective film (not shown). The reflective film may be attached to the surface 410-1 of the material receiving part 410 in the form of a film, a coating, or a sheet. For example, the surface 410-1 of the material receiving part 410 may be coated with metal in order to form the reflective film.

The aforementioned illumination apparatus 2000 shown in FIG. 1 may be applied to various fields. For example, the illumination apparatus 2000 may be applied to various types of lamps (e.g. a low beam, a high beam, a taillight, a side lamp, a signal light, a day running light (DRL), a fog lamp) of a vehicle, a flashlight, a signal light, and various kinds of illumination equipment.

In addition, the illumination apparatus 2000 shown in FIG. 1 may be used together with various other illumination optical systems having constructions that differ from that of the illumination optical system 500 shown in FIG. 1. Alternatively, the light emitting apparatus 1000 may be used in the various field without the illumination optical system 500.

For example, the light emitting apparatus 1000 and the illumination apparatus 2000 may be applied to home or industrial display or indication apparatuses, in addition to the vehicle.

Hereinafter, an embodiment 1000A of the light emitting apparatus 1000 shown in FIG. 1 will be described with reference to FIGs. 3 to 24F. However, the disclosure is not limited thereto. In the following description, it is assumed that the front surface of the light emitting apparatus 1000A is the surface visible from the negative x-axis direction.

FIG. 3 is an upper assembled perspective view of an embodiment 1000A of the light emitting apparatus 1000 shown in FIG. 1.

FIG. 4 is a plan view of the light emitting apparatus 1000A shown in FIG. 3, FIG. 5 is an assembled front view of the light emitting apparatus 1000A shown in FIG. 3, FIG. 6A is an upper exploded perspective view of the light emitting apparatus 1000A shown in FIG. 3, FIGs. 6B and 6C are respectively an exploded perspective view and an assembled perspective view showing part 'A' in FIG. 6A, and FIG. 7 is an exploded front view of the light emitting apparatus 1000A shown in FIG. 3.

In FIGs. 3, 4, and 5, a housing 100 is shown as being transparent for easy understanding of the state in which a light source unit 200A, a light transmission unit 300A, and a wavelength conversion unit 400A are disposed in the housing 100.

Referring to FIGs. 3 to 7, the light emitting apparatus 1000A may include a housing 100, a light source unit 200A, a light transmission unit 300A, and a wavelength conversion unit 400A. The light source unit 200A, a light transmission unit 300A, and a wavelength conversion unit 400A are embodiments of the light source unit 200, the light transmission unit 300, and the wavelength conversion unit 400 shown in FIG. 1, respectively, and therefore a duplicate description thereof will be omitted.

The light source unit 200A includes a plurality of light sources 210A, a plurality of collimation lenses 220, a light source base 230, a barrel unit 240, a lens holder unit 250, and a retainer unit 260.

The light sources 210A emit a plurality of laser beams. The light sources 210A may include first and second laser light sources 212 and 214. The first and second laser light sources 212 and 214 respectively correspond to the first and second laser light sources 212 and 214 shown in FIG. 1. The first and second laser light sources 212 and 214 may respectively emit first and second laser beams.

The light emitting apparatus 1000A shown in FIGs. 3 to 7 will be described as including the first and second laser light sources 212 and 214 that are arranged to be vertically connected to the light path conversion unit 310A shown in FIG. 2A. However, the disclosure is not limited thereto. In another embodiment, the light emitting apparatus 1000A shown in FIGs. 3 to 7 may include the first and second laser light sources 212 and 214 that are arranged to be horizontally connected to the light path conversion unit 310B shown in FIG. 2B. In a further embodiment, the light emitting apparatus 1000A shown in FIGs. 3 to 7 may include the first and second laser light sources 212 and 214 that intersect each other to be connected to the light path conversion unit 310C shown in FIG. 2C.

In the case in which the arrangement of the first and second laser light sources 212 and 214 is changed from the vertical arrangement to the horizontal arrangement or the intersecting arrangement, the internal construction of the light transmission unit 300A may be changed, and components of the collimation lenses 220, the barrel unit 240, the lens holder unit 250, and the retainer unit 260 are disposed in the light source unit 200A so as to correspond to the horizontal arrangement or the intersecting arrangement. Consequently, the following description may also be applied in the case in which the laser light sources are arranged horizontally or intersect each other.

The collimation lenses 220 may include first and second collimation lenses 222 and 224. The first collimation lens 222 performs the same function as the first collimation lens 222 shown in FIG. 1. The second collimation lens 224 performs the same function as the second collimation lens 224 shown in FIG. 1.

Meanwhile, the light source base 230 fixes and supports each of the first and second laser light sources 212 and 214. The first and second laser light sources 212 and 214 respectively emit polarized laser beams. The polarization directions of the laser beams may be changed depending on the directions in which the first and second laser light sources 212 and 214 emit the beams. That is, in the case in which the first and second laser light sources 212 and 214 are turned 90 degrees, the polarization directions of the laser beams are changed 90 degrees. Thus, since the arrangement of the first and second laser light sources 212 and 214 is critical, the light source base 230 fixes and supports the first and second laser light sources 212 and 214, thereby preventing the polarization directions of the laser beams from being changed.

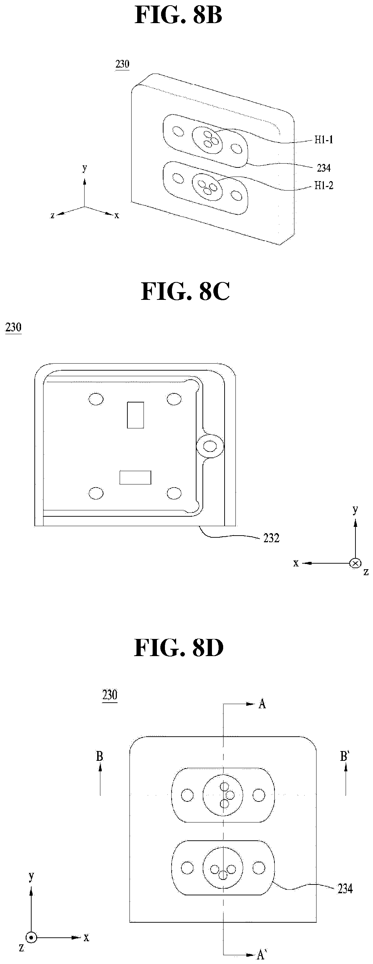

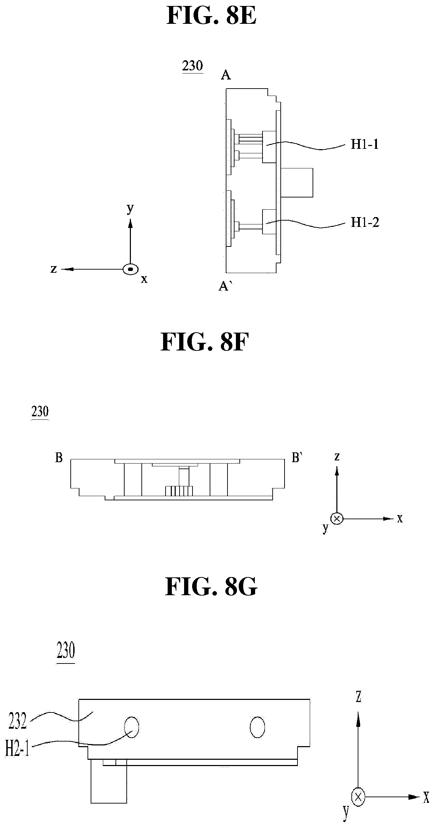

FIGs. 8A to 8I are views showing various shapes of the light source base 230. That is, FIG. 8A is a left perspective view of the light source base 230, FIG. 8B is a right perspective view of the light source base 230, FIG. 8C is a left side view of the light source base 230, FIG. 8D is a right side view of the light source base 230, FIG. 8E is a sectional view taken along ling A-A' of the light source base 230 shown in FIG. 8D, FIG. 8F is a sectional view taken along ling B-B' of the light source base 230 shown in FIG. 8D, FIG. 8G is a bottom view of the light source base 230, FIG. 8H is a plan view of the light source base 230, and FIG. 8I is a rear view of the light source base 230.

Referring to FIGs. 8A to 8I, the first and second laser light sources 212 and 214 are inserted into first and second light sources holes H1-1 and H1-2 formed in the light source base 230 such that the first and second laser light sources 212 and 214 are fixed and supported by the light source base 230.

In addition, the light source base 230 dissipates heat generated from the first and second laser light sources 212 and 214. To this end, the light source base 230 is made of a material exhibiting high thermal conductivity, such as aluminum, copper, brass, gold, and silver.

In addition, the light source base 230 may be fastened to (or, engage with) the housing 100 (e.g. a main base 110), a description of which will follow. The light source base 230 may include a fastening part 232 disposed in the part with which the main base 110 engages. The fastening part 232 of the light source base 230 may include a thermal pad or thermal compound exhibiting high thermal conductivity. In the case in which the fastening part 232 of the light source base 230 includes a heat dissipation material, heat generated from the first and second laser light sources 212 and 214 may be dissipated through the housing 100 via the light source base 230. However, the disclosure is not limited thereto. In other embodiments, the fastening part may be disposed at the portion of the main base 110 that contacts the light source base 230, rather than at the light source base 230.

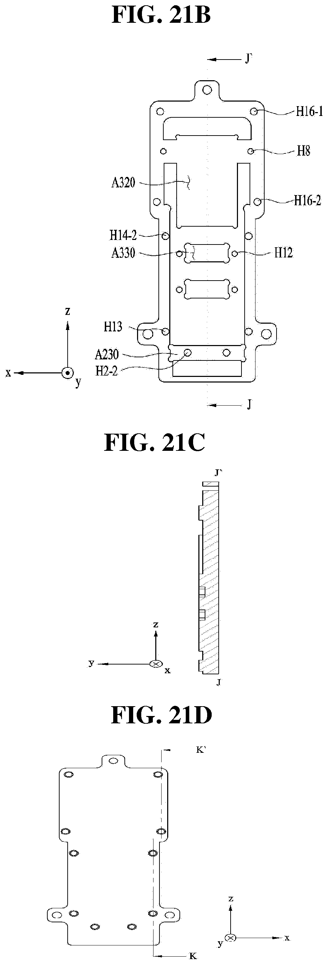

In order to fasten the light source base 230 and the main base 110, the light source base 230 may include a hole H2-1 as shown in FIG. 8G, and the main base 110 may include a hole H2-2 as shown in FIG. 21B. A screw S0 may be inserted through the holes H2-1 and H2-2, as shown in FIG. 5, such that the light source base 230 and the main base 110 are fastened to each other.

Meanwhile, the barrel unit 240 may include first and second barrels 242 and 244. The first collimation lens 222 is fastened to the first barrel 242, and the second collimation lens 224 is fastened to the second barrel 244. In addition, the barrel unit 240 may be fastened to the lens holder unit 250.

FIGs. 9A to 9C are views showing various shapes of each of the first and second barrels 242 and 244. The first and second barrels 242 and 244 have the same shape. FIG. 9A is a sectional view taken along line C-C', in a y-axis direction, of the second barrel 244 shown in FIG. 6A, FIG. 9B is a right side view of each of the first and second barrels 242 and 244, and FIG. 9C is a left side view of each of the first and second barrels 242 and 244.

Referring to FIGs. 9A to 9C, the first collimation lens 222 and the second collimation lens 224 may be fastened into holes H3 formed in the first and second barrels 242 and 244.

In addition, the lens holder unit 250 may include first and second lens holders 252 and 254.

The first lens holder 252 aligns the first barrel 242 with the first laser light source 212, and the second lens holder 254 aligns the second barrel 244 with the second laser light source 214.

If the first and second collimation lenses 222 and 224 are not aligned with the first and second beams emitted from the first and second laser light sources 212 and 214, respectively, the first and second collimation lenses 222 and 224 may not output collimated beams, and the beams may be incident on the reflection unit 320A, which focuses beams that are incident thereon at an angle of 0 degrees on the focal point, at incorrect angles. As a result, the beams reflected by the reflection unit 320A may be difficult to focus on the focal point F. Even if the beams reflected by the reflection unit 320A are focused on the focal point F, the size of the beams may be increased. In order to solve these problems, the lens holder unit 250 aligns the light sources 210A with the barrel unit 240.

In addition, the first lens holder 252 tightly pushes the first laser light source 212 against the light source base 230 so that the first laser light source 212 sticks to the light source base 230, and the second lens holder 254 tightly pushes the second laser light source 214 against the light source base 230 so that the second laser light source 214 sticks to the light source base 230. If first and second lens holders 252 and 254 do not push the first and second laser light sources 212 and 214, respectively, heat generated from the first and second laser light sources 212 and 214 may not be sufficiently dissipated. As a result, the efficiency of the first and second laser light sources 212 and 214 may be reduced and the first and second laser light sources 212 and 214 may be damaged. In order to solve these problems, the lens holder unit 250 may push the light sources 210A.

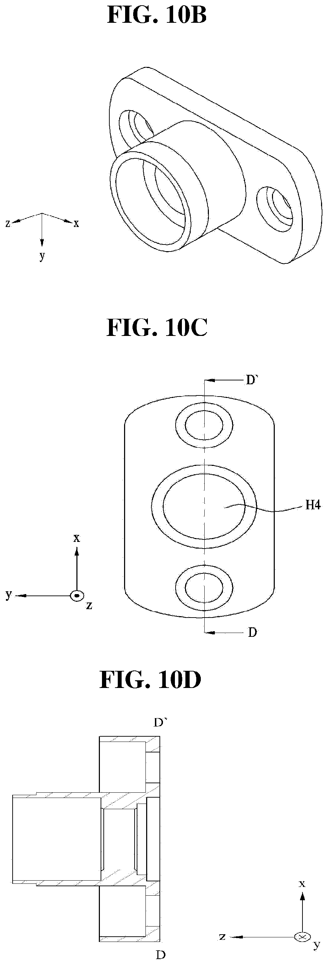

FIGs. 10A to 10F are views showing various shapes of each of the first and second lens holders 252 and 254. The first and second lens holders 252 and 254 have the same shape. FIG. 10A is a left upper perspective view of each of the first and second lens holders 252 and 254, FIG. 10B is a right upper perspective view of each of the first and second lens holders 252 and 254, FIG. 10C is a right side view of each of the first and second lens holders 252 and 254, FIG. 10D is a sectional view taken along line D-D' of each of the first and second lens holders 252 and 254 shown in FIG. 10C, FIG. 10E is a plan view of each of the first and second lens holders 252 and 254, and FIG. 10F is a left side view of each of the first and second lens holders 252 and 254. In FIG. 10D, the hatched surface is a cutaway surface.

Referring to FIGs. 10A to 10D, the first and second barrels 242 and 244 may be respectively inserted into holes H4 formed in the first and second lens holders 252 and 254, and the first and second lens holders 252 and 254 are inserted into recesses 234 in the light source base 230. To this end, the x-axis length of each of the recesses 234 shown in FIGs. 8B and 8D are substantially similar to the x-axis length of each of the first and second lens holders 252 and 254 shown in FIG. 10C, and the y-axis width of each of the recesses 234 may be substantially equal to the y-axis width of each of the first and second lens holders 252 and 254 shown in FIG. 10C. Here, the substantial equality means that the first and second lens holders 252 and 254 are fitted into the recesses 234 so as to be fixed in the recesses 234.

Consequently, the first and second laser light sources 212 and 214 are tightly pushed against and stuck to the light source base 230 by the first and second lens holders 252 and 254.

In addition, the retainer unit 260 of the light source unit 200A may include first and second retainers 262 and 264. The first retainer 262 fixes the first collimation lens 222 fastened to the first barrel 242, and the second retainer 264 fixes the second collimation lens 224 fastened to the second barrel 244.

In FIG. 6A, the first and second collimation lenses 222 and 224 are shown as being respectively disposed between the first and second laser light sources 212 and 214 and the first and second lens holders 252 and 254. In FIG. 6B, however, the first and second collimation lenses 222 and 224 are shown as being disposed between the retainer unit 260 and the barrel unit 240 for easy understanding.

FIGs. 11A to 11C are views showing various shapes of each of the first and second retainers 262 and 264. The first and second retainers 262 and 264 have the same shape. FIG. 11A is a sectional view of each of the first and second retainers 262 and 264 when cut in the y-axis direction, FIG. 11B is a right side view of each of the first and second retainers 262 and 264 shown in FIG. 11A, and FIG. 11C is a left side view of each of the first and second retainers 262 and 264 shown in FIG. 11A.

FIG. 12 is a cutaway sectional view showing the state in which the first retainer 262, the first barrel 242, and the first collimation lens 222 are coupled to each other. That is, FIG. 12 shows the state in which the first barrel 242 shown in FIG. 9A, the first retainer 262 shown in FIG. 11A, and the first collimation lens 222 shown in FIGs. 6A, 6B, and 7 are coupled to each other. The second retainer 264, the second barrel 244, and the second collimation lens 224 may be coupled to each other in the same manner as shown in FIG. 12.

Referring to FIGs. 11A to 11C and 12, the first retainer 262 may be disposed between the first collimation lens 222 fastened in the third hole H3 and the inner surface of the first barrel 242 in order to fix the first collimation lens 222. In addition, the second retainer 264 may be disposed between the second collimation lens 224 fastened in the third hole H3 and the inner surface of the second barrel 244 in order to fix the second collimation lens 224.

According to circumstances, the retainer unit 260 may be omitted from the light source unit 200A.

Referring back to FIGs. 3 to 7, the light transmission unit 300A may include a light path conversion unit 310A, a reflection unit 320A, a path holder 330, and a reflection holder 340. The light path conversion unit 310A and the reflection unit 320A perform the same function as the light path conversion unit 310 and the reflection unit 320 shown in FIG. 1, respectively. That is, the light path conversion unit 310A gathers a plurality of laser beams into a single beam, and the reflection unit 320A outputs the single beam to the focal point. The reflection unit 320A may be located only in the region on which the single beam in incident.

Since the first and second laser light sources 212 and 214 shown in FIGs. 3 to 7 are arranged vertically, the light path conversion unit 310A may be configured as shown in FIG. 2A. (Constructional details on the light transmission unit, including light path conversion unit, reflection unit, path holder and reflection holder, are not covered by the present invention.)

As described with reference to FIGs. 2A to 2C, the light path conversion unit 310 may have various shapes depending on the direction in which the first and second laser light sources 212 and 214 are arranged. In consideration thereof, a description will be given of the construction of the light path conversion unit 310 depending on the direction in which the first and second laser light sources 212 and 214 are arranged in the light emitting apparatus 1000A shown in FIGs. 3 to 7.

FIGs. 13A and 13B are respectively a sectional view and a plan view showing an exemplary light path conversion unit 310, FIGs. 14A and 14B are respectively a sectional view and a plan view showing another 310B exemplary light path conversion unit 310, and FIGs. 15A and 15B are respectively a sectional view and a plan view showing a further 310C exemplary light path conversion unit 310. In FIGs. 13A to 15B, only a main base 110, a plurality of light sources 210A, 210B, and 210C, a light path conversion unit 310A, 310B, and 310C, and a reflection unit 320 are shown for easy understanding.

The light path conversion unit 310A shown in each of FIGs. 13A and 13B corresponds to the light path conversion unit 310A shown in FIG. 2A, the light path conversion unit 310B shown in each of FIGs. 14A and 14B corresponds to the light path conversion unit 310B shown in FIG. 2B, and the light path conversion unit 310C shown in each of FIGs. 15A and 15B corresponds to the light path conversion unit 310C shown in FIG. 2C.

In the case in which the first and second laser light sources 212 and 214 are arranged vertically or horizontally, i.e. in the case in which the first and second laser light sources 212 and 214 are arranged in the y-axis direction or the x-axis direction, the light path conversion unit 310A and 310B may include a prism and a light transmission and reflection unit, as shown in FIGs. 13A, 13B, 14A, and 14B.

In the case in which the first and second laser light sources 212 and 214 are arranged vertically, as shown in FIGs. 13A and 13B, the prism 314 of the light path conversion unit 310A reflects the second beam L2, incident thereon in the direction parallel to the first direction, in which the first beam L1 was incident, in the second direction. At this time, the light transmission and reflection unit 312 transmits the first beam L1 in the first direction and reflects the second beam L2, which has been reflected in the second direction by the prism 314, in the first direction. As a result, a single beam L is output to the reflection unit 320A.

In the case in which the first and second laser light sources 212 and 214 are arranged horizontally, as shown in FIGs. 14A and 14B, the prism 314 of the light path conversion unit 310B reflects the second beam L2, incident thereon in the direction parallel to the first direction in which the first beam L1 was incident, in the third direction, which is perpendicular to the first and second directions. At this time, the light transmission and reflection unit 312 transmits the first beam L1 in the first direction and reflects the second beam L2, which has been reflected in the third direction by the prism 314, in the first direction. As a result, a single beam L is output to the reflection unit 320B.

In the case in which the first and second laser light sources 212 and 214 intersect each other, as shown in FIGs. 15A and 15B, the light path conversion unit 310C may include only a light transmission and reflection unit. That is, the light transmission and reflection unit 310C transmits the first beam L1 in the first direction and reflects the second beam L2, which was incident in the third direction, in the first direction. As a result, a single beam L is output to the reflection unit 320C.

In addition, the path holder 330 fixes the light path conversion unit 310A and 310C. The path holder 330 and the light path conversion unit 310A and 310C may be coupled to each other using a bonding agent such as a UV hardener or a thermal hardener.

FIGs. 16A to 16F are views showing various shapes of an exemplary path holder 330. FIG. 16A is an upper perspective view of the path holder 330, FIG. 16B is a left side view of the path holder 330, FIG. 16C is a right side view of the path holder 330, FIG. 16D is a sectional view taken along line E-E' of the path holder 330 shown in FIG. 16C, FIG. 16E is a rear view of the path holder 330, and FIG. 16F is a plan view of the path holder 330.

Referring to FIGs. 16A to 16F, the light path conversion unit 310A may be inserted into a hole H5-1 formed in the path holder 330 such that light path conversion unit 310A is fixed by the path holder 330. In the case in which the light path conversion unit 310C shown in FIGs. 15A and 15B is fixed instead of the light path conversion unit 310A shown in FIGs. 13A and 13B, the size of the hole H5-1 may be decreased. In the case in which the first and second laser light sources 212 and 214 are arranged horizontally as shown in FIGs. 14A and 14B, the path holder 330 may be omitted.

In addition, the path holder 330 may be provided in the bottom thereof with an additional hole H5-2, through which the path holder 330 is fastened to the main base 110, a description of which will follow.

FIGs. 17A to 17D are views showing various shapes of an exemplary reflection unit 320A. FIG. 17A is an upper perspective view of the reflection unit 320A, FIG. 17B is a front view of the reflection unit 320A, FIG. 17C is a right side view of the reflection unit 320A, and FIG. 17D is a bottom view of the reflection unit 320A. The reflection units 320B and 320C shown in FIGs. 14A to 15B may have the same shape, as shown in FIGs. 17A to 17D. In FIG. 17B, 'SX' indicates the axis of symmetry of the reflection unit 320A.

Referring to FIGs. 17A and 17B, the reflection unit 320A may include a body 321 and a reflective layer 322. The reflective layer 322 is disposed on an inclined surface 323 of the body 321 to reflect the single beam. The reflective layer 322 may be disposed on the inclined surface 323 of the body 321 in the form of a thin film. That is, in the case in which the body 321 is made of a material that is suitable to reflect light, the reflective layer 322 may be omitted. The reason for this is that the inclined surface 323 of the body 321 may reflect light. For example, the body 321 may be made of aluminum.

In the case in which the inclined surface 323 of the body 321 is mirror-coated, instead of providing the reflective layer 322, 90% or more of the single beam may be reflected by the reflection unit 320A when the wavelength of the single beam is 400 nm to 500 nm.

In addition, as shown in FIG. 17B, the reflection unit 320A may further include side holes 324 and 325, a description of which will follow.

In addition, the reflection unit 320A may be more securely coupled to the main base 110 of the housing 100 by the reflection holder 340. However, the reflection holder 340 may be omitted depending on how the reflection unit 320A and the main base 110 are coupled to each other. For example, in the case in which the reflection unit 320A and the main base 110 are coupled to each other using a bonding agent, the reflection holder 340 may be omitted. In this case, a screw S2 may also be omitted.

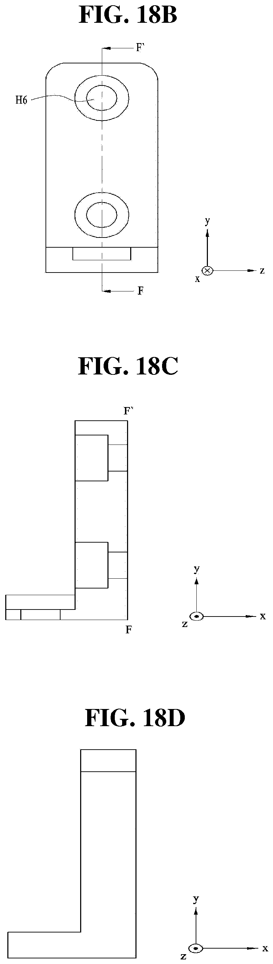

FIGs. 18A to 18E are views showing various shapes of an exemplary reflection holder 340. FIG. 18A is an upper perspective view of the reflection holder 340, FIG. 18B is a front view of the reflection holder 340, FIG. 18C is a sectional view taken along line F-F' of the reflection holder 340 shown in FIG. 18B, FIG. 18D is a right side view of the reflection holder 340, and FIG. 18E is a plan view of the reflection holder 340.

Referring to FIGs. 18A to 18E, the reflection holder 340 may include at least one hole H6 formed in the body thereof and at least one hole H7 formed in the bottom thereof. The body 321 of the reflection unit 320A shown in FIG. 17B includes one or more side holes 324 and 325 formed in the side thereof. Screws (not shown) may be inserted through the hole H6 of the reflection holder 340 and through the side holes 324 and 325 of the reflection unit 320A, and a screw S2 may be inserted through the hole H7 of the reflection holder 340 and into a hole H8 formed in the main base 110, as shown in FIG. 21B, whereby the reflection holder 340 may fix the reflection unit 320A to the main base 110.

Referring back to FIGs. 3 to 7, the wavelength conversion unit 400A may include a wavelength conversion material (not shown) (which corresponds to the wavelength conversion material 440 of FIG. 1), a material receiving part 410A, and a coupling member 420. The material receiving part 410A corresponds to an embodiment of the material receiving part 410 shown in FIG. 1 and performs the same function as the material receiving part 410 shown in FIG. 1. (Details on the wavelength conversion unit, including wavelength conversion material, material receiving part and coupling member, are not covered by the present invention.)

The material receiving part 410A may include a top holder 412 and a bottom holder 414.

The top holder 412 defines the upper part of a material receiving space for receiving the wavelength conversion material, and the bottom holder 414 defines the lower part of the material receiving space for receiving the wavelength conversion material. That is, the material receiving space for receiving the wavelength conversion material may be defined by the coupling of the top holder 412 and the bottom holder 414. The wavelength conversion material may be fixed by the top holder 412 and the bottom holder 414. The bottom holder 414 fixes the wavelength conversion material such that the wavelength conversion material cannot be separated from the top holder 412.

FIGs. 19A to 19G are views showing various shapes of an exemplary top holder 412. FIG. 19A is an upper perspective view of the top holder 412, FIG. 19B is a lower perspective view of the top holder 412, FIG. 19C is a bottom view of the top holder 412, FIG. 19D is a sectional view taken along line G-G' of the top holder 412 shown in FIG. 19C, FIG. 19E is a sectional view taken along line H-H' of the top holder 412 shown in FIG. 19C, FIG. 19F is a front view of the top holder 412, and FIG. 19F is a plan view of the top holder 412.

Referring to FIGs. 19A to 19G, the top holder 412 is provided in a center 412-1 thereof with a hole H9 as an exit. The hole H9 corresponds to the exit through which light having a wavelength converted by the wavelength conversion material is output. In addition, the hole H9 formed in the center 412-1 has a sectional shape inclined from the top 412T of the top holder 412. The end of the inclined section may have a step of about 0.3 mm. In the case in which the end of the inclined section has a step, as described above, yellow light spreading at a high angle may be blocked when light having a wavelength converted by the wavelength conversion material is output.

In addition, the size of the hole formed in the center 412-1 of the top holder 412 is greater than the size of the light emitting area, and may be reduced to the size of the light emitting area. For example, the diameter of the hole formed in the center 412-1 of the top holder 412 may be 0.2 mm to 1.5 mm. However, the disclosure is not limited thereto.

FIGs. 20A to 20E are views showing various shapes of the bottom holder 414. FIG. 20A is a lower perspective view of the bottom holder 414, FIG. 20B is a bottom view of the bottom holder 414, FIG. 20C is a sectional view taken along line I-I' of the bottom holder 414 shown in FIG. 20B, FIG. 20D is a front view of the bottom holder 414, and FIG. 20E is a plan view of the bottom holder 414.

Referring to FIGs. 20A to 20E, the bottom holder 414 may include a hole H10 formed in the center thereof and holes H11 formed in the edge thereof. The single beam reflected by the reflection unit 320A may advance the wavelength conversion material through the hole H10.

In addition, screws may be inserted through the holes H11 such that the top holder 412 and the bottom holder 414 are coupled to each other.

Meanwhile, the housing 100 receives the light source unit 200A, the light transmission unit 300A, and the wavelength conversion unit 400A. To this end, the housing 100 may include a main base 110, a main cover 120, and a wavelength base 130.

The main base 110 defines the bottom of the light emitting apparatus 1000A. The main base 110 supports the light source unit 200A, the light transmission unit 300A, and the wavelength conversion unit 400A for playing the role of a base.

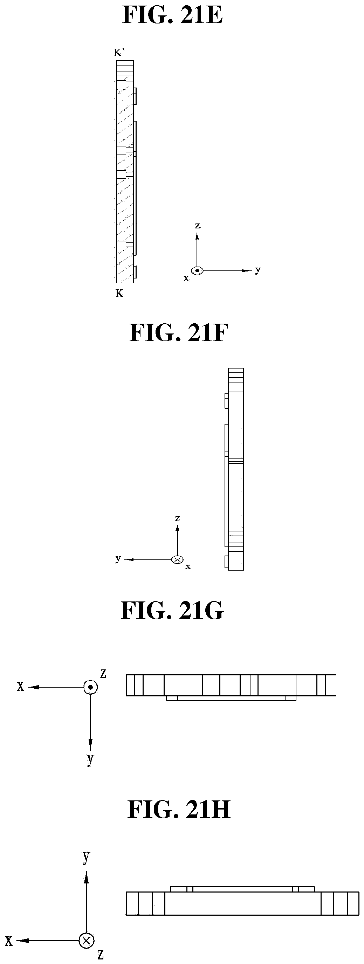

FIGs. 21A to 21H are views showing various shapes of the main base 110. FIG. 21A is an upper perspective view of the main base 110, FIG. 21B is a plan view of the main base 110, FIG. 21C is a sectional view taken along line J-J' of the main base 110 shown in FIG. 21B, FIG. 21D is a bottom view of the main base 110, FIG. 21E is a sectional view taken along line K-K' of the main base 110 shown in FIG. 21D, FIG. 21F is a front view of the main base 110, FIG. 21G is a right side view of the main base 110, and FIG. 21H is a left side view of the main base 110.

Referring to FIGs. 21A to 21H, the main base 110 may include various areas A230, A330, and A320. The area A230 is an area in which the light source base 230 is disposed, the area A330 is an area in which the path holder 330 is disposed, and the area A320 is an area in which the reflection unit 320A is disposed.

In addition, the main base 110 may include various screw holes H8 and H12, etc., formed in the side thereof in order to support and fix the light source unit 200A and the light transmission unit 300A.

Also referring to FIG. 5, the screw S2 may be inserted through the hole H8 formed in the main base 110 and the hole H7 formed in the reflection holder 340 such that the reflection holder 340 is fastened to the main base 110.

In addition, a screw S3 may be inserted through the hole H12 formed in the main base 110 and the hole H5-2 formed in the path holder 330 shown in FIG. 16A such that the path holder 330 is fastened to the main base 110.

As can be seen from the above description, the main base 110 supports the light source base 230 of the light source unit 200A and the path holder 330 of the light transmission unit 300A and, in addition, supports the reflection unit 320a through the reflection holder 340.

In addition, the main cover 120 is fastened to the main base 110 to define a space for receiving the light source unit 200A and at least a portion of the light transmission unit 300A.

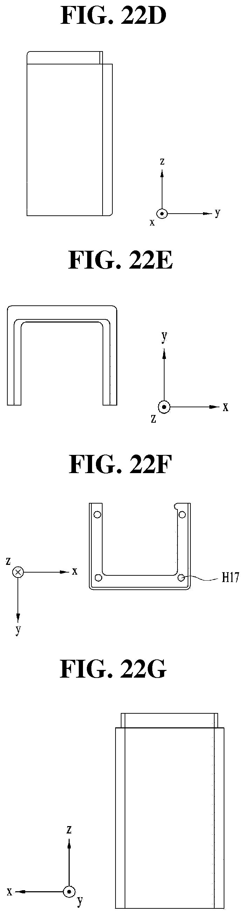

FIGs. 22A to 22G are views showing various shapes of the main cover 120. FIG. 22A is a lower perspective view of the main cover 120, FIG. 22B is a bottom view of the main cover 120, FIG. 22C is a sectional view taken along line L-L' of the main cover 120 shown in FIG. 22B, FIG. 22D is a rear view of the main cover 120, FIG. 22E is a right side view of the main cover 120, FIG. 22F is a left side view of the main cover 120, and FIG. 22G is a plan view of the main cover 120.

Referring to FIGs. 22A and 22B, the main cover 120 may be fastened to the main base 110 by screw engagement. For example, a screw S4 shown in FIG. 5 may be inserted through a hole H14-2 formed in the main base 110 and a hole H14-1 formed in the main cover 120 such that the main cover 120 is fastened to the main base 110.

In addition, referring to FIGs. 4 and 5, the light source unit 200A, the path holder 330, the path conversion unit 310A, and a portion of the reflection unit 320A of the light transmission unit 300A may be received in a space defined by the coupling of the main cover 120 and the main base 110.

In addition, the wavelength base 130 is fastened to the main base 110. The wavelength base 130 defines a space for receiving the remaining members of the light transmission unit 300A (e.g. the remaining portion of the reflection unit 320A and the reflection holder 340), which are not received in the space defined by the coupling of the main cover 120 and the main base 110. Furthermore, the wavelength base 130 may define a space for receiving the wavelength conversion unit 400A.

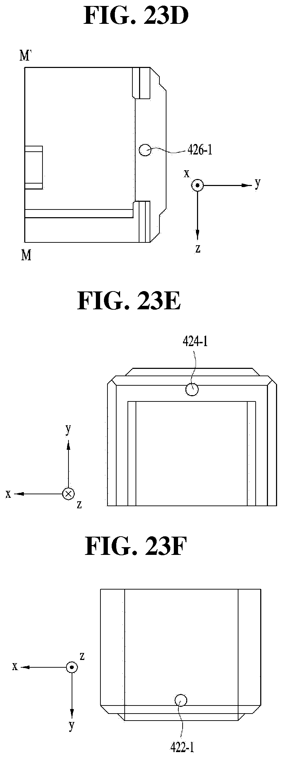

FIGs. 23A to 23I are views showing various shapes of the wavelength base 130. FIG. 23A is an upper perspective view of the wavelength base 130, FIG. 23B is a lower perspective view of the wavelength base 130, FIG. 23C is a bottom view of the wavelength base 130, FIG. 23D is a sectional view taken along line M-M' of the wavelength base 130 shown in FIG. 23C,

FIG. 23E is a left side view of the wavelength base 130, FIG. 23F is a right side view of the wavelength base 130, FIG. 23G is a rear view of the wavelength base 130, FIG. 23H is a front view of the wavelength base 130, and FIG. 23I is a plan view of the wavelength base 130.

Referring to FIG. 23C, the wavelength base 130 includes holes H15-1 and H15-2. The main base 110 shown in FIG. 21B includes holes H16-1 and H16-2. Consequently, the wavelength base 130 may be fastened to the main base 110 by screw engagement. That is, a screw S5 may be inserted through the hole H16-1 shown in FIG. 21B and the hole H15-1 shown in FIG. 23C, and a screw S1 may be inserted through the hole H16-2 and the hole H15-2 such that the wavelength base 130 is coupled to the main base 110.

In addition, the wavelength base 130 may include a receiving space 132 for receiving and for fastening the wavelength conversion unit 400A, which is defined in the upper part thereof. The receiving space 132 may be formed in the upper part of the wavelength base 130 so as to have a circular and passing-through hole shape. The material receiving part 410A may be coupled to the wavelength base 130 in various manners. For example, in the case in which the material receiving part 410A is coupled to the wavelength base 130 by screw engagement, the wavelength conversion unit 400A may include a coupling member 420. The coupling member 420 may include a plurality of screws 422, 424, 426, and 428. The four screws 422, 424, 426, and 428 may be respectively inserted into screw holes 422-1, 424-1, 426-1, and 428-1 formed in the wavelength base 130 such that the wavelength conversion unit 400A, specifically the material receiving part 410A, is fixed and coupled to the wavelength base 130.

In addition, the top holder 412 may be coupled to the wavelength base 130 by screw engagement such that the position of the focus (corresponding to F of FIG. 1) located on the center of the wavelength conversion material received in the material receiving part 410A is moved in the y-axis direction. That is, the y-axis height of the focus may be adjusted using a screw, and then the top holder 412 may be fixed to the wavelength base 130 using the four screws 422, 424, 426, and 428. In other embodiments, the top holder 412 may be fastened to the wavelength base 130 without adjusting the position of the focus, and then top holder 412 may be fixed to the wavelength base 130 using a bonding agent, instead of using the screws 422, 424, 426, and 428.

As shown in FIG. 1, the wavelength base 130 may be aligned with and coupled with the main base 110 such that the focus F is located on the center of the wavelength conversion material 440.

In addition, the remaining portion of the reflection unit 320A and the reflection holder 340 may be received in a space formed by the coupling of the wavelength base 130 and the main base 110. As previously described, a portion of the reflection unit 320A may be received in a receiving space defined by the coupling of the main base 110 and the main cover 120. However, the disclosure is not limited thereto.

In addition, the main cover 120 shown in FIG. 22A and the wavelength base 130 shown in FIG. 23A may be coupled to each other by fitting. That is, as shown in FIG. 22A, the front end of the entrance of the main cover 120 has a step 122, and the main cover 120 is fitted into the entrance of the wavelength base 130 shown in FIG. 23A in a direction indicated by an arrow ARR such that the main cover 120 and the wavelength base 130 are coupled to each other.

The main cover 120 is coupled to the main base 110 together with the wavelength base 130 in order to define a space for receiving the light source unit 200A, the light transmission unit 300A, and the wavelength conversion unit 400A. Consequently, the members 200A, 300A, and 400A received in this space may not be contaminated by moisture or dust. For example, blue light excited at the space formed by the light source unit 200A, the light transmission unit 300A, and the wavelength conversion unit 400A may be prevented from being exposed to the outside.

In the previous embodiment, the main cover 120 and the wavelength base 130 are formed separately and coupled to the main base 110. However, the disclosure is not limited thereto. In other embodiments, the main cover 120 and the wavelength base 130 may be integrally formed and coupled to the main base 110.

In addition, when the light source unit 200A, the light transmission unit 300A, and the wavelength conversion unit 400A are connected to the corresponding areas of the housing 100, the connections therebetween may be sealed.

In addition, as previously described, each of the light source unit 200A, the light transmission unit 300A, and the wavelength conversion unit 400A may be coupled to the main base 110 by screw engagement. However, the disclosure is not limited thereto. In other embodiments, each of the light source unit 200A, the light transmission unit 300A, and the wavelength conversion unit 400A may be coupled to the main base 110 using a bonding agent. In this case, the holes formed in the respective units for screw engagement and the screws may be omitted.

In addition, the housing 100 may further include a circuit cover 140. The circuit cover 140 prevents a printed circuit board (PCB) (not shown) from being exposed to the outside while protecting the PCB. To this end, the circuit cover 140 may be coupled to the main base 110 and the main cover 120 while being spaced apart from the light source cover 230.

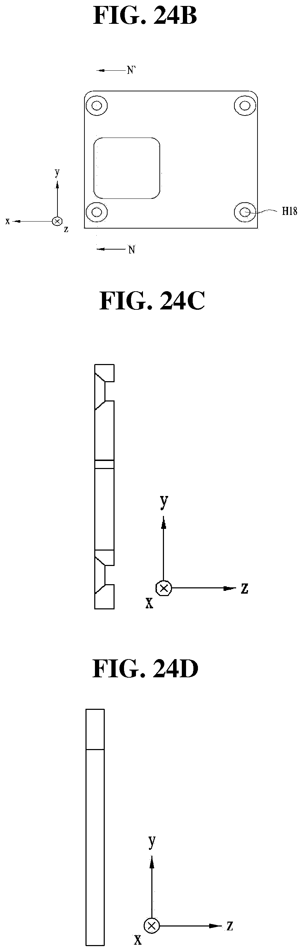

FIGs. 24A to 24F are views showing various shapes of the circuit cover 140. FIG. 24A is a perspective view of the circuit cover 140, FIG. 24B is a left side view of the circuit cover 140, FIG. 24C is a sectional view taken along line N-N' of the circuit cover 140 shown in FIG. 24B, FIG. 24D is a front view of the circuit cover 140, FIG. 24E is a right side view of the circuit cover 140, and FIG. 24F is a plan view of the circuit cover 140.

As shown in FIG. 24B, the circuit cover 140 is provided in corners thereof with holes H18, and the main cover 120 shown in FIG. 22F is provided in the left surface thereof with holes H17. Consequently, screws (not shown) may be inserted through the holes H17 and H18 such that the circuit cover 140 is fastened to the main cover 120. However, the disclosure is not limited thereto. In other embodiments, the circuit cover 140 may be coupled to the main cover 120 using a bonding agent.

Hereinafter, the features of the light emitting apparatuses 1000 and 1000A according to embodiments will be described with reference to the accompanying drawings.

FIGs. 25A and 25B are views illustrating features in which a plurality of beams is reflected by a parabolic reflective surface.

Referring to FIG. 25A, beams starting from the focus F may be irradiated as parallel beams PL by a parabolic reflective surface 600 based on the characteristics of the parabolic reflective surface 600.

Referring to FIG. 25B, on the other hand, parallel beams PL incident in parallel on the parabolic reflective surface 600 are gathered on the focus F. The beams gathered on the focus F may be spread after passing through the focus F, which may affect the function, efficiency, and manufacture of a light emitting apparatus including a plurality of light sources for emitting a plurality of beams. That is, when the parallel beams PL are reflected by the parabolic reflective surface 600 in the state in which the parallel beams PL are not gathered as a single beam and then advance to the focus F, if the path on which the reflected beams are gathered on the focus F deviates in the y-axis direction or the z-axis direction, two focuses may be present, with the result that the light efficiency of the light emitting apparatus may be reduced. In addition, the size of the beams may be increased, whereby the function of the light emitting apparatus may be deteriorated.

Furthermore, in the case in which such a light emitting apparatus is manufactured, the positional tolerance of the wavelength conversion unit located on the focus F does not exist. That is, if the position of the wavelength conversion unit deviates from the focus even a little, the beams are emitted from two points. When the light emitting apparatus is manufactured, therefore, it is difficult to align the beams, and the tolerance is critical.

In order to solve the above problems, a light emitting apparatus according to an embodiment gathers a plurality of laser parallel beams into a single beam using the polarization characteristics of laser beams emitted from a plurality of laser light sources 212 and 214, and outputs the single beam to the parabolic reflective surface of the reflection unit 320 and 320A to 320C. Consequently, the tolerance between the position of the focus and the x-axis, y-axis, and z-axis of the wavelength conversion material 440 is alleviated, and the size of the light sources included in the light emitting apparatus 1000 and 1000A may be easily adjusted. In addition, the luminance of the light emitting apparatus 1000 and 1000A may be improved, whereby the efficiency of the light emitting apparatus 1000 and 1000A may be increased, and the overall size of the light emitting apparatus 1000 and 1000A may be reduced. Furthermore, it is possible to alleviate sensitivity in alignment of the first and second laser light sources 212 and 214 with the first and second collimation lenses 222 and 224.

As is apparent from the above description, in a light emitting apparatus according to an embodiment and an illumination apparatus including the same, the tolerance between the position of a focus and the x-axis, y-axis, and z-axis of a wavelength conversion material of a wavelength conversion unit is alleviated, the size of light sources included in the light emitting apparatus may be easily adjusted. In addition, the luminance and efficiency of the light emitting apparatus are improved, and the overall size of the light emitting apparatus may be reduced. Furthermore, it is possible to alleviate sensitivity in alignment of first and second laser light sources with first and second collimation lenses.

Although embodiments have been described with reference to a number of illustrative embodiments thereof, it should be understood that numerous other modifications and embodiments can be devised by those skilled in the art. In addition to variations and modifications in the component parts and/or arrangements, alternative uses will also be apparent to those skilled in the art.

## Claims

1. A light emitting apparatus (1000, 1000A), comprising:
a light source unit (200, 200A) emitting a plurality of laser beams ;
a light transmission unit (300, 300A) gathering the laser beams emitted from the light source unit (200, 200A) into a single beam and outputting the single beam to a single focus;
a wavelength conversion unit (400) converting a wavelength of the single beam on the focus; and
a housing (100) receiving the light source unit (200, 200A), the light transmission unit (300, 300A), and the wavelength conversion unit (400),
wherein the light source unit (200, 200A) comprises:
a first laser light source (212) emitting a first beam, which is one of the laser beams;
a second laser light source (214) emitting a second beam, which is another of the laser beams and proceeds parallel to the first beam;
a light source base (230) fixing the first and second laser light sources (212, 214) and having recesses (234);
a first lens holder (252), the first laser light source (212) being disposed between the light source base (230) and the first lens holder (252), and
a second lens holder (254), the second laser light source (214) being disposed between the light source base (230) and the second lens holder (254),
wherein the first lens holder (252) tightly pushes the first laser light source (212) against the light source base (230),
wherein the second lens holder (254) tightly pushes the second laser light source (214) against the light source base (230), and
wherein the first and second lens holders (252, 254) are fitted into the recesses (234) so as to be fixed in the recesses (234).

2. The light emitting apparatus (1000, 1000A) according to claim 1, wherein the light source unit (200, 200A) further comprises:
a first collimation lens (222) collimating the first beam emitted from the first laser light source (212); and
a second collimation lens (224) collimating the second beam emitted from the second laser light source (214).

3. The light emitting apparatus (1000, 1000A) according to claim 2, wherein the light source unit (200, 200A) further comprises:
a first barrel (242), to which the first collimation lens (222) is fastened; and
a second barrel (244), to which the second collimation lens (224) is fastened, and
wherein the first and second lens holders (252, 254) align the first and second barrels (242, 244) with the first and second laser light sources (212, 214), respectively.

4. The light emitting apparatus (1000, 1000A) according to claim 3, wherein the light source unit (200, 200A) further comprises:
a first retainer (262) fixing the first collimation lens (222) fastened to the first barrel (242); and
a second retainer (264) fixing the second collimation lens (224) fastened to the second barrel (244).

5. The light emitting apparatus (1000, 1000A) according to claim 3 or 4, wherein the light source base (230) comprises a fastening part (232) fastened to the housing (100).

6. The light emitting apparatus (1000, 1000A) according to claim 5, wherein the fastening part (232) of the light source base (230) comprises a thermal pad or a thermal compound.

7. The light emitting apparatus (1000, 1000A) according to claim 5, wherein the fastening part (232) of the light source base (230) comprises a heat dissipation material.

8. The light emitting apparatus (1000, 1000A) according to claim 4, wherein the first retainer (262) is disposed between the first collimation lens (222) and an inner surface of the first barrel (242).

9. The light emitting apparatus (1000, 1000A) according to claim 4, wherein the second retainer (264) is disposed between the second collimation lens (224) and an inner surface of the second barrel (244).

10. The light emitting apparatus (1000, 1000A) according to any one of claims 1 to 9, wherein the housing (100) comprises:
a main base (110) supporting the light source unit (200, 200A), the light transmission unit (300, 300A), and the wavelength conversion unit (400), the main base (110) corresponding to a bottom of the light emitting apparatus (1000, 1000A);
a main cover (120) fastened to the main base (110) for defining a space for receiving the light source unit (200, 200A) and at least a portion of the light transmission unit (300, 300A); and
a wavelength base (130) fastened to the main base (110) for defining a space for receiving a remaining portion of the light transmission unit (300, 300A) and for defining a space for receiving the wavelength conversion unit (400).

11. An illumination apparatus (2000), comprising:
the light emitting apparatus (1000, 1000A) according to any one of claims 1 to 4410; and
an illumination reflector (520) reflecting wavelength-converted light output from the focus of the light emitting apparatus (1000, 1000A) such that the wavelength-converted light is output.

## Patentansprüche

1. Licht emittierende Einrichtung (1000, 1000A), umfassend:
eine Lichtquelleneinheit (200, 200A), welche eine Vielzahl von Laserstrahlen emittiert;
eine Lichttransmissionseinheit (300, 300A), welche die von der Lichtquelleneinheit (200, 200A) emittierten Laserstrahlen in einen einzelnen Strahl sammelt und den einzelnen Strahl auf einem einzelnen Fokus ausgibt;
eine Wellenlängenkonvertierungseinheit (400), welche eine Wellenlänge des einzelnen Strahls auf dem Fokus konvertiert; und
ein Gehäuse (100), welches die Lichtquelleneinheit (200, 200A), die Lichttransmissionseinheit (300, 300A) und die Wellenlängenkonvertierungseinheit (400) aufnimmt,
wobei die Lichtquelleneinheit (200, 200A) umfasst:
eine erste Laserlichtquelle (212), welche einen ersten Strahl emittiert, welcher einer der Laserstrahlen ist;
eine zweite Laserlichtquelle (214), welche einen zweiten Strahl emittiert, welcher ein weiterer der Laserstrahlen ist und parallel zu dem ersten Strahl verläuft;
eine Lichtquellenbasis (230), welche die erste und zweite Laserlichtquelle (212, 214) fixiert und Aussparungen (234) aufweist;
einen ersten Linsenhalter (252), wobei die erste Laserlichtquelle (212) zwischen der Lichtquellenbasis (230) und dem ersten Linsenhalter (252) angeordnet ist, und
einen zweiten Linsenhalter (254), wobei die zweite Laserlichtquelle (214) zwischen der Lichtquellenbasis (230) und dem zweiten Linsenhalter (254) angeordnet ist,
wobei der erste Linsenhalter (252) die erste Laserlichtquelle (212) dicht gegen die Lichtquellenbasis (230) drückt,
wobei der zweite Linsenhalter (254) die zweite Laserlichtquelle (214) dicht gegen die Lichtquellenbasis (230) drückt, und
wobei der erste und zweite Linsenhalter (252, 254) in die Aussparungen (234) eingebaut sind, sodass sie in den Aussparungen (234) fixiert sind.

2. Licht emittierende Einrichtung (1000, 1000A) nach Anspruch 1, wobei die Lichtquelleneinheit (200, 200A) weiter umfasst:
eine erste Kollimationslinse (222), welche den von der ersten Laserlichtquelle (212) emittierten ersten Strahl bündelt; und
eine zweite Kollimationslinse (224), welche den von der zweiten Laserlichtquelle (214) emittierten zweiten Strahl bündelt;

3. Licht emittierende Einrichtung (1000, 1000A) nach Anspruch 2, wobei die Lichtquelleneinheit (200, 200A) weiter umfasst:
eine erste Fassung (242) auf welcher die erste Kollimationslinse (222) befestigt ist; und
eine zweite Fassung (244) auf welcher die zweite Kollimationslinse (224) befestigt ist; und
wobei der erste und zweite Linsenhalter (252, 254) die erste und zweite Fassung (242, 244) mit der ersten bzw. zweiten Laserlichtquelle (212, 214) ausrichten.

4. Licht emittierende Einrichtung (1000, 1000A) nach Anspruch 3, wobei die Lichtquelleneinheit (200, 200A) weiter umfasst:
eine erste Aufnahme (262), welche die auf der ersten Fassung (242) befestigte erste Kollimationslinse (222) fixiert; und
eine zweite Aufnahme (264), welche die auf der zweiten Fassung (244) befestigte zweite Kollimationslinse (224) fixiert.

5. Licht emittierende Einrichtung (1000, 1000A) nach Anspruch 3 oder 4, wobei die Lichtquellenbasis (230) einen Befestigungsteil (232) umfasst, welcher auf dem Gehäuse (100) befestigt ist.

6. Licht emittierende Einrichtung (1000, 1000A) nach Anspruch 5, wobei der Befestigungsteil (232) der Lichtquellenbasis (230) ein Wärmeleitpad oder ein Wärmeleitmaterial umfasst.

7. Licht emittierende Einrichtung (1000, 1000A) nach Anspruch 5, wobei der Befestigungsteil (232) der Lichtquellenbasis (230) ein Wärmeableitungsmaterial umfasst.

8. Licht emittierende Einrichtung (1000, 1000A) nach Anspruch 4, wobei die erste Aufnahme (262) zwischen der ersten Kollimationslinse (222) und einer inneren Oberfläche der ersten Fassung (242) angeordnet ist.

9. Licht emittierende Einrichtung (1000, 1000A) nach Anspruch 4, wobei zweite Aufnahme (264) zwischen der zweiten Kollimationslinse (224) und einer inneren Oberfläche der zweiten Fassung (244) angeordnet ist.

10. Licht emittierende Einrichtung (1000, 1000A) nach einem der Ansprüche 1 bis 9, wobei das Gehäuse (100) umfasst:
eine Hauptbasis (110), welche die Lichtquelleneinheit (200, 200A), die Lichttransmissionseinheit (300, 300A) und die Wellenlängenkonvertierungseinheit (400) trägt, wobei die Hauptbasis (110) einer Unterseite der Licht emittierenden Einrichtung (1000, 1000A) entspricht;
eine Hauptabdeckung (120), welche auf der Hauptbasis (110) befestigt ist, zum Definieren eines Raums zum Aufnehmen der Lichtquelleneinheit (200, 200A) und zumindest eines Abschnitts der Lichttransmissionseinheit (300, 300A); und
eine Wellenlängenbasis (130), welche auf der Hauptbasis (110) befestigt ist, zum Definieren eines Raums zum Aufnehmen des verbleibenden Abschnitts der Lichttransmissionseinheit (300, 300A) und zum Definieren eines Raums zum Aufnehmen der Wellenlängenkonvertierungseinheit (400).

11. Beleuchtungseinrichtung (2000), umfassend:
die Licht emittierende Einrichtung (1000, 1000A) nach einem der Ansprüche 1 bis 10; und
einen Beleuchtungsreflektor (520), welcher wellenlängenkonvertiertes Licht, welches von dem Fokus der Licht emittierenden Einrichtung (1000, 1000A) ausgegeben wird, reflektiert, sodass das wellenlängenkonvertierte Licht ausgegeben wird.

## Revendications

1. Émetteur de lumière (1000, 1000A), comprenant :
une unité de source de lumière (200, 200A) émettant une pluralité de faisceaux laser ;
une unité de transmission de lumière (300, 300A) rassemblant les faisceaux laser émis depuis l'unité de source de lumière (200, 200A) en un faisceau unique et délivrant en sortie le faisceau unique vers un seul foyer ;
une unité de conversion de longueur d'onde (400) convertissant une longueur d'onde du faisceau unique sur le foyer ; et
un boîtier (100) recevant l'unité de source de lumière (200, 200A), l'unité de transmission de lumière (300, 300A) et l'unité de conversion de longueur d'onde (400),
dans lequel l'unité de source de lumière (200, 200A) comprend :
une première source de lumière laser (212) émettant un premier faisceau, qui est un des faisceaux laser ;
une seconde source de lumière laser (214) émettant un second faisceau, qui est un autre des faisceaux laser et se propage parallèle au premier faisceau ;
une base de sources de lumière (230) fixant les première et seconde sources de lumière laser (212, 214) et ayant des évidements (234) ;
un premier support de lentille (252), la première source de lumière laser (212) étant disposée entre la base de sources de lumière (230) et le premier support de lentille (252), et
un second support de lentille (254), la seconde source de lumière laser (214) étant disposée entre la base de sources de lumière (230) et le second support de lentille (254),
dans lequel le premier support de lentille (252) presse fermement la première source de lumière laser (212) contre la base de sources de lumière (230),
dans lequel le second support de lentille (254) presse fermement la seconde source de lumière laser (214) contre la base de sources de lumière (230), et
dans lequel les premier et second supports de lentille (252, 254) sont ajustés dans les évidements (234) de sorte à être immobilisés dans les évidements (234) .

2. Émetteur de lumière (1000, 1000A) selon la revendication 1, dans lequel l'unité de source de lumière (200, 200A) comprend en outre :
une première lentille de collimation (222) collimatant le premier faisceau émis depuis la première source de lumière laser (212) ; et
une seconde lentille de collimation (224) collimatant le second faisceau émis depuis la seconde source de lumière laser (214).

3. Émetteur de lumière (1000, 1000A) selon la revendication 2, dans lequel l'unité de source de lumière (200, 200A) comprend en outre :
un premier cylindre (242) auquel la première lentille de collimation (222) est attachée ; et
un second cylindre (244) auquel la seconde lentille de collimation (224) est attachée ; et
dans lequel les premier et second supports de lentille (252, 254) alignent les premier et second cylindres (242, 244) respectivement avec les première et seconde sources de lumière laser (212, 214).

4. Émetteur de lumière (1000, 1000A) selon la revendication 3, dans lequel l'unité de source de lumière (200, 200A) comprend en outre :
un premier élément de retenue (262) fixant la première lentille de collimation (222) attachée au premier cylindre (242) ; et
un second élément de retenue (264) fixant la seconde lentille de collimation (224) attachée au second cylindre (244).

5. Émetteur de lumière (1000, 1000A) selon la revendication 3 ou 4, dans lequel la base de sources de lumière (230) comprend une partie d'attache (232) attachée au boîtier (100).

6. Émetteur de lumière (1000, 1000A) selon la revendication 5, dans lequel la partie d'attache (232) de la base de sources de lumière (230) comprend un pavé thermique ou un composé thermique.

7. Émetteur de lumière (1000, 1000A) selon la revendication 5, dans lequel la partie d'attache (232) de la base de sources de lumière (230) comprend un matériau de dissipation de chaleur.

8. Émetteur de lumière (1000, 1000A) selon la revendication 4, dans lequel le premier élément de retenue (262) est disposé entre la première lentille de collimation (222) et une surface interne du premier cylindre (242).

9. Émetteur de lumière (1000, 1000A) selon la revendication 4, dans lequel le second élément de retenue (264) est disposé entre la seconde lentille de collimation (224) et une surface interne du second cylindre (244).

10. Émetteur de lumière (1000, 1000A) selon l'une quelconque des revendications 1 à 9, dans lequel le boîtier (100) comprend :
une base principale (110) supportant l'unité de source de lumière (200, 200A), l'unité de transmission de lumière (300, 300A) et l'unité de conversion de longueur d'onde (400), la base principale (110) correspondant à un fond de l'émetteur de lumière (1000, 1000A) ;
un couvercle principal (120) attaché à la base principale (110) pour définir un espace pour recevoir l'unité de source de lumière (200, 200A) et au moins une partie de l'unité de transmission de lumière (300, 300A) ; et
une base de longueur d'onde (130) attachée à la base principale (110) pour définir un espace pour recevoir une partie restante de l'unité de transmission de lumière (300, 300A) et pour définir un espace pour recevoir l'unité de conversion de longueur d'onde (400).

11. Appareil d'éclairage (2000), comprenant :
l'émetteur de lumière (1000, 1000A) selon l'une quelconque des revendications 1 à 10 ; et
un réflecteur d'éclairage (520) reflétant une lumière à longueur d'onde convertie délivrée en sortie du foyer de l'émetteur de lumière (1000, 1000A) de sorte que la lumière à longueur d'onde convertie est délivrée en sortie.
